# EUROPEAN PATENT APPLICATION

(11) **EP 3 888 794 A1**
(43) Date of publication of application: **06.10.2021**
(21) Application number: 21165884.4
(22) Date of filing: 30.03.2021
(51) Int. Cl.: B04B 5/04, G01N 35/00

(54) **CENTRIFUGE AND SPECIMEN PREPARATION DEVICE**

(30) Priority: 30.03.2020 JP 2020060946
(71) Applicant: SYSMEX CORPORATION, Kobe-shi Hyogo 651-0073 (JP)
(72) Inventor: Shinya, Ryutaro, Hyogo, 651-0073 (JP)
(74) Representative: Hoffmann Eitle

(57) **Abstract**

A centrifuge (10) according to one or more embodiments may include a rotor (11) comprising a holder (12) for holding a reaction container (14) and swingably supporting the holder (12); a rotating shaft (16) connected to the rotor (11); a rotor drive unit (17) for rotating the rotating shaft (16); and a restriction member (15) arranged to come into contact with the holder (12) to restrict a tilt angle of the reaction container (14) when the rotor drive unit (17) is rotating the rotating shaft(16).

## Description

### BACKGROUND

The disclosure relates to a centrifuge with a temperature control function and a specimen preparation device including such a centrifuge.

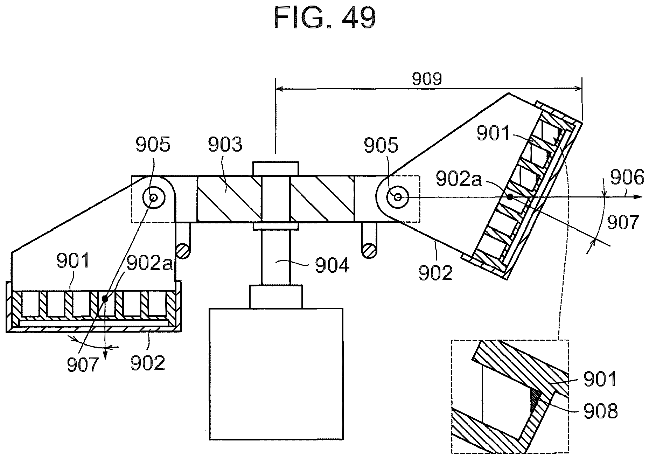

Japanese Patent Application Publication No. H9-24300 ("Patent Document 1"), such as illustrated in FIG. 49, discloses a microplate 901 that contains specimens, a body 903 having a bucket 902 for holding the microplate 901, and a centrifuge rotor that rotates the body 903 on a rotary shaft 904. In FIG. 49, the left side of the rotary shaft 904 illustrates a state in which the rotor is stopped, and the right side illustrates a state in which the rotor is rotating. When the rotor is rotating, the bucket 902 swings about a pin 905 used to hang the bucket 902 on the body 903 due to the centrifugal force. In Patent Document 1, when the microplate 901 is horizontal, the center of gravity 902a of the bucket 902 is shifted from the vertical line exactly below the pin 905. Hence, during rotation of the rotor, the orientation of the wells of the microplate 901 inclines by an angle 907 relative to the direction of the centrifugal force 906. The specimens contained in the microplate 901 move in the direction of the centrifugal force and are settled at corner portions of the bottoms of the wells (see the enlarged view in FIG. 49). Thus, it is possible in Patent Document 1 to aspirate the supernatant without sucking the precipitate 908 when aspirating the supernatant with a pipette or the like after centrifugation.

### SUMMARY

In the above Patent Document 1, since the contents are precipitated, shifted to one side during rotation of the rotor, it is possible to prevent suction of the precipitate 908 when aspirating the supernatant. However, since the bucket 902, during rotation of the rotor, swings up to the degree in which the center of gravity 902a of the bucket 902 shifted from the pin 905, which is the swing center, agrees with the direction of the centrifugal force 906, the maximum radius 909 during rotation of the rotor, including the bucket 902, is large. The specimen preparation device including such a centrifugation unit requires a large area for installation. Large specimen preparation devices can be installed in only limited facilities, and hence smaller specimen preparation devices that require less installation areas are demanded.

The present invention is aimed at providing a configuration capable of preventing suction of precipitate when aspirating supernatant after centrifugation while preventing the device from being larger.

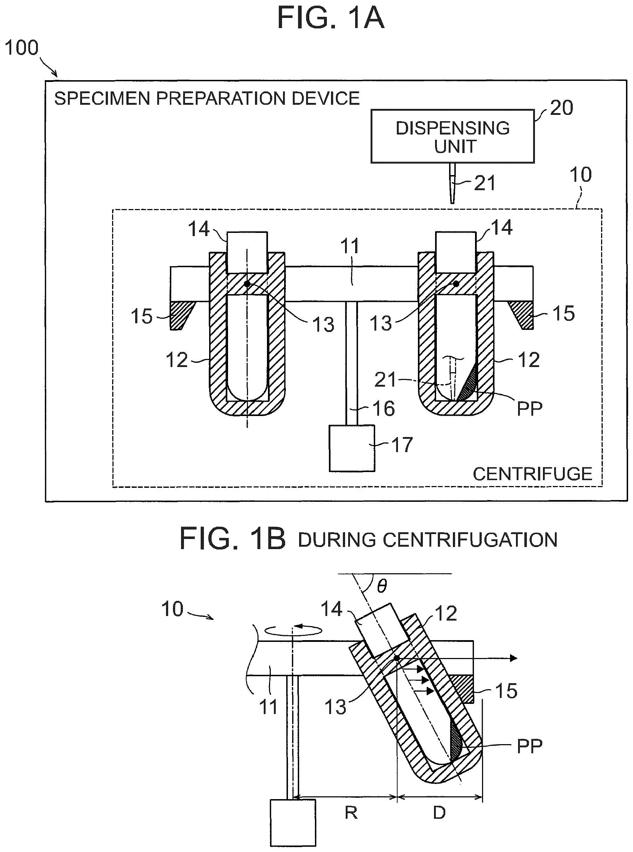

To achieve the above object, a centrifuge (10) according to a first aspect of the invention, as illustrated in FIG. 1, includes: a rotor (11) that includes a holder (12) that holds a reaction container (14) and swingably supports the holder (12); a rotating shaft (16) connected to the rotor (11); a rotor drive unit (17) that rotates the rotating shaft (16); and a restriction member (15) that is arranged to come into contact with the holder (12) to restrict a tilt angle of the reaction container (14) when the rotor drive unit (17) is rotating the rotating shaft (16).

The centrifuge (10) according to the first aspect of the invention, as described above, includes the restriction member (15) that comes into contact with the holder (12) to restrict the tilt angle (θ) of the reaction container (14) when the rotor (11) is rotating. With this configuration, the orientation of the swung reaction container (14) during rotation of the rotor (11) is restricted to an angle inclined from the direction of the centrifugal force, and thus it is possible to make the contents of the reaction container (14) settled, shifted from the bottom of the reaction container (14). Thus, this configuration prevents suction of the precipitate when the nozzle (21) aspirates the supernatant inside the reaction container (14) after centrifugation. In addition, since the swing movement of the holder (12) during rotation of the rotor (11) is restricted to the state in which the orientation of the reaction container (14) is not tilted up to the degree in which the orientation will agree with the direction of the centrifugal force, the maximum radius during rotation of the rotor (11) is smaller than in the configuration in which the holder (12) swings up to the degree in which the orientation of the holder (12) agrees with the direction of the centrifugal force. Thus, even though the device has the restriction member (15), it is possible to prevent the size of the device from being larger. With the above configuration, it is possible to provide a configuration capable of preventing suction of precipitate during aspiration of supernatant after centrifugation while preventing the device from being larger.

A specimen preparation device according to a second aspect of the invention, as illustrated in FIG. 1, is a device that prepares a specimen by reacting a specimen with a reagent, the device including the centrifuge (10) according to the first aspect of the invention and a dispensing unit (20) that dispenses a reagent to the reaction container (11).

Since the specimen preparation device according to the second aspect of the invention includes the centrifuge (10) according to the first aspect of the invention, it is possible to provides a configuration capable of preventing suction of precipitate during aspiration of supernatant after centrifugation while preventing the device from being larger.

The present invention makes it possible to provide a configuration capable of preventing suction of precipitate during aspiration of supernatant after centrifugation while preventing the device from being larger.

### BRIEF DESCRIPTION OF DRAWINGS

FIG. 1A is a schematic diagram illustrating an overview of a specimen preparation device, and FIG. 1B is a schematic diagram illustrating a rotor during centrifugation;
FIG. 2 is a schematic diagram illustrating a configuration example of the specimen preparation device;
FIG. 3 is a schematic diagram illustrating a configuration related to a dispensing operation of the specimen preparation device;
FIG. 4 is a schematic diagram illustrating a first configuration example of a dispensing unit;
FIG. 5 is a schematic diagram illustrating a second configuration example of a dispensing unit;
FIG. 6 is a schematic diagram illustrating a third configuration example of a dispensing unit;
FIG. 7 is a schematic diagram illustrating a positional relationship among a movement axis, an aspirating position, and a discharging position of the dispensing unit;
FIG. 8 is a schematic diagram illustrating an example of the dispensing operation of the dispensing unit;
FIG. 9 is a schematic longitudinal sectional diagram for explaining the structure of a centrifugation unit;
FIG. 10 is a schematic diagram illustrating a configuration example of a holding structure of a holder of a rotor;
FIG. 11 is a schematic diagram illustrating a first configuration example of a restriction member;
FIG. 12 is a schematic diagram illustrating a second configuration example of a restriction member;
FIG. 13 is a schematic diagram illustrating a third configuration example of a restriction member;
FIG. 14A is a diagram illustrating a centrifugation operation, FIG. 14B is a diagram illustrating a supernatant removal operation, FIG. 14C is a diagram illustrating a reagent dispensing operation, and FIG. 14D is diagram illustrating an agitation operation;
FIG. 15A is a diagram illustrating an angular velocity-time graph for explaining reciprocating rotation in agitation, FIG. 15B is a diagram illustrating an angular velocity-time graph for explaining intermittent rotation, and FIG. 15C is a diagram illustrating an angular velocity-time graph for explaining rotation during centrifugation;
FIG. 16 is a diagram illustrating a first configuration example of a heat transfer member and holders;
FIG. 17 is a diagram illustrating a second configuration example of a heat transfer member and holders;
FIG. 18 is a diagram illustrating a third configuration example of heat transfer members and holders;
FIG. 19 is a schematic diagram illustrating a rotary operation of the rotor in a reagent dispensing operation and a nozzle cleaning operation;
FIG. 20 is a schematic diagram illustrating the nozzle cleaning operation;
FIG. 21 is a schematic diagram illustrating the nozzle cleaning operation after dispensing a reagent;
FIG. 22 is a schematic diagram illustrating the nozzle cleaning operation after removing supernatant;
FIG. 23 is a diagram illustrating a flowchart of a series of control operations for a reagent dispensing process, supernatant removal process, and nozzle cleaning process;
FIG. 24 is a schematic diagram illustrating a configuration example of a first reagent setting part with a cover that can be opened and closed;
FIG. 25 is a schematic diagram illustrating a first configuration example of a shutter member;
FIG. 26 is a schematic diagram illustrating a second configuration example of a shutter member;
FIG. 27 is a schematic longitudinal sectional diagram illustrating an example of the internal structure of the first reagent setting part;
FIG. 28A is a schematic diagram illustrating another configuration example of a reagent setting part, and FIG. 28B is a schematic diagram illustrating an example of a shutter member;
FIG. 29 is a schematic diagram illustrating a configuration example of a fluid circuit of the specimen preparation device illustrated in FIG. 2;
FIG. 30 is a block diagram illustrating a configuration related to a control process of the specimen preparation device and a control unit;
FIG. 31 is a schematic diagram illustrating a configuration example of a lid part;
FIG. 32 is a schematic diagram illustrating an example of an arrangement pattern of the holders to which reaction containers are to be set;
FIG. 33 is a schematic diagram illustrating a configuration example in which the holders to hold first containers are displayed on a display unit;
FIG. 34 is a diagram illustrating a flowchart of a control process for starting specimen preparation of the specimen preparation device;
FIG. 35 is a diagram illustrating a flowchart of control of a process for displaying the holders to which reaction containers are to be set;
FIG. 36 is a diagram illustrating a flowchart of control of a dispensing process;
FIG. 37 is a diagram illustrating a flowchart of control of an opening/closing control process for the shutter member;
FIG. 38 is a diagram illustrating a flowchart control of a reaction process;
FIG. 39 is a diagram illustrating a flowchart of control of centrifugation;
FIG. 40 is a diagram illustrating a flowchart of control of an agitation process;
FIG. 41 is a flowchart illustrating control of a supernatant removal process;
FIG. 42 is a flowchart illustrating control of a nozzle cleaning process;
FIG. 43 is a first diagram illustrating an operation flow of the specimen preparation device;
FIG. 44 is a second diagram illustrating an operation flow of the specimen preparation device;
FIG. 45 is a third diagram illustrating an operation flow of the specimen preparation device;
FIG. 46 is a diagram illustrating a specific example of the specimen preparation process;
FIG. 47 is a schematic diagram illustrating a modified example concerning nozzle cleaning in a specimen preparation process;
FIG. 48 is a flowchart illustrating control for a nozzle cleaning process according to the modified example; and
FIG. 49 is a diagram illustrating a conventional technique.

### DETAILED DESCRIPTION

One or more embodiments are explained below with reference to the drawings.

### [Overview of Centrifuge]

With reference to FIG. 1, an overview of a centrifuge 10 according to one embodiment is described.

The centrifuge 10 is a device that separates components having different densities contained in the contents of a reaction container 14 by rotating the reaction container 14 and applying centrifugal force to the contents of the reaction container 14. In particular, the centrifuge 10 according to this embodiment has a function of reacting a reagent with a sample in the reaction container 14. With this function, the centrifuge 10 is used to prepare a specimen to be used for sample analysis and the like.

The centrifuge 10, as illustrated in Fig. 1A, include holders 12, a rotor 11, a rotating shaft 16, a rotor drive unit 17, and restriction members 15 that each restricts the tilt angle θ of the reaction container 14 by coming into contact with the holder 12 during rotation of the rotor 11.

The holder 12 is configured to hold a reaction container 14. The holder 12 has a cylindrical shape, for example, and can receive the reaction container 14 inside.

The rotor 11 is configured to swingably support the holders 12. The holder 12 is attached to the rotor 11 via a swing shaft 13 on an outer peripheral portion. The rotor 11 has a rotationally symmetric shape when viewed from above. In the example of FIG. 1A, the rotor 11 has a disk shape. The rotor 11 is provided with holders 12 along the circumferential direction. The holders 12 are arranged so as to be rotationally symmetric with respect to the rotating shaft 16.

The rotating shaft 16 is connected to the rotor 11. The rotating shaft 16 is configured to be rotatable on the central axis, and supports the rotor 11. The rotating shaft 16 is formed so as to extend in the vertical direction and has the rotor 11 connected to its upper end portion.

The rotor drive unit 17 is configured to rotate the rotating shaft 16. The centrifuge 10 rotates the rotating shaft 16 by the rotor drive unit 17, thereby rotating the rotating shaft 16, the rotor 11, and the holder 12 in an integrated fashion. Thus, the reaction container 14 held by the holder 12 is rotated.

The holder 12 is oriented along the vertical direction at least during non-rotation of the rotor 11. That is, during non-rotation, the reaction container 14 is oriented such that its opening faces upward. The holder 12 is swung radially outward by the centrifugal force during the rotation of the rotor 11.

The restriction member 15 is provided to the rotor 11 as illustrated in Fig. 1A. The restriction member 15 is provided on the lower surface side of the rotor 11. The restriction member 15 rotates together with the rotor 11. The restriction member 15 is fixed to the rotor 11 not to move during rotation of the rotor 11. The restriction member 15 is at a position away from the holder 12 not to come into contact with the holder 12 when the rotor 11 is not rotating.

Fig. 1B illustrates the holder 12 during rotation of the rotor 11. During rotation of the rotor 11, the holder 12 swings by the centrifugal force such that the lower end portion of the holder 12 moves radially outward. The tilt angle θ of the holder 12 is restricted because the holder 12 comes into contact with the restriction member 15 such that the holder 12 will not swing further outward. The tilt angle θ is the angle between the longitudinal direction of the reaction container 14 held by the holder 12 and the direction of the centrifugal force acting on the contents of the reaction container 14. The tilt angle θ is within a range of 0 < θ < 90 degrees. The longitudinal direction of the holder 12 agrees with the longitudinal direction of the reaction container 14. In the process of centrifugation, the contents of the reaction container 14 settle toward the direction of the centrifugal force. Hence, the precipitate PP is settled, shifted to the position angled by the tilt angle θ from the direction toward the inner bottom of the reaction container 14. In other words, the precipitate PP is settled at a position shifted from the inner bottom of the reaction container 14 to the outer side of the inner peripheral surface in the radial direction of the rotation.

Since the tilt angle θ of the holder 12 is restricted, the radius of rotation of the rotating portions of the centrifuge 10 is restricted. In other words, in the case where the tilt angle of the holder 12 is not restricted, the holder 12 swings up to the degree in which the longitudinal direction of the reaction container 14 agrees with the direction of the centrifugal force, and thus the radius of rotation is larger. In the present embodiment in which the tilt angle θ is restricted, the swing movement of the holder 12 is restricted before the longitudinal direction of the reaction container 14 agrees with the direction of the centrifugal force, and thus the degree of increase in the radius of rotation is reduced. Specifically, since the tilt angle θ is restricted, the distance D from the swing shaft 13 to the outermost peripheral portion during rotation is shorter, and hence the maximum radius (R+D) of the rotation objects including the rotor 11 and the holder 12 is smaller.

The centrifuge 10 of the present embodiment, as described above, includes the restriction members 15 that come into contact with the holders 12 during rotation of the rotor 11 to restrict the tilt angles θ of the reaction containers 14. With this configuration, the orientation of the swung reaction container 14 is restricted, during rotation of the rotor 11, to an angle inclined to the direction of the centrifugal force, and thus it is possible to make the contents of the reaction container 14 settled, shifted from the bottom of the reaction container 14. Thus, when the supernatant inside the reaction container 14 after centrifugation is aspirated by a nozzle 21, it is possible to prevent the nozzle 21 from sucking the precipitate. In addition, since the swing movement of the holder 12 is restricted, during rotation of the rotor 11, to a state in which the orientation of the reaction container 14 is tilted to a degree in which the orientation does not agree with the direction of the centrifugal force, the maximum radius (R+D) during rotation of the rotor 11 is smaller than in the configuration in which the holder 12 swings to the degree in which the orientation of the holder 12 agrees with the direction of the centrifugal force. Thus, even though the device has the restriction members 15, it is possible to prevent the size of the device from becoming larger. With the above configuration, it is possible to provide a configuration that prevents the precipitate from being sucked during aspiration of the supernatant after centrifugation while preventing the device from being larger.

### [Overview of Specimen Preparation Device]

With reference to FIG. 1, an overview of a specimen preparation device 100 according to one embodiment is described.

The specimen preparation device 100 is a device for preparing a specimen by reacting a reagent with a sample. In this embodiment, the specimen preparation device 100 includes the centrifuge 10 described above. The centrifuge 10 is provided as a centrifugation unit that performs centrifugation in the specimen preparation device 100.

Samples are ones collected from living bodies. Examples of such samples collected from living bodies include liquids such as blood (whole blood, serum or plasma), urine, or other body fluids collected from subjects, or liquids obtained by subjecting collected liquids to predetermined pretreatments. Alternatively, samples may be, for example, some of tissues or cells of subjects other than liquids. Subjects are typically humans, but may be animals other than humans. The specimen preparation device 100 prepares specimens for clinical examination or medical study of samples collected from patients, for example.

Prepared specimens are subjected to measurement. For example, specimens prepared by the specimen preparation device 100 are measured with a measuring device. The measuring device detects predetermined test substances contained in the specimens. Examples of the test substances may include certain components, cells or formed elements in blood or urine samples. The test substances may be nucleic acids such as DNA (deoxyribonucleic acid), specific cells, intracellular substances, antigens or antibodies, proteins, peptides, or the like. The measuring device may be a blood cell counter, a cell image analyzer, a blood coagulation measuring apparatus, an immunoassay device, a urine particle measuring device, or the like, or may be a measuring device other than those described above. The specimen preparation device 100 may also be incorporated as a part of a measuring device.

The specimen preparation device 100 performs pretreatment for detecting test substances by measurement. The specimen preparation device 100 reacts samples with reagents containing substances that specifically react with test substances, for example. Such substances that specifically react with test substances include, for example, labeling substances. In measurement, test substances bound to the test substances are detected by detecting labeling substances. The reagent can be at least one selected from the group consisting of a hemolytic agent, an immobilizing agent, a permeating agent, an antibody reagent, and a cleaning liquid.

As illustrated in FIG. 1A, the specimen preparation device 100 includes a centrifuge 10 and a dispensing unit 20.

The dispensing unit 20 is capable of aspirating and discharging liquid. The dispensing unit 20 includes a nozzle 21 that aspirates the supernatant inside the reaction container 14 after centrifugation.

The dispensing unit 20 has one or more nozzles 21. The nozzle 21 is a tubular member extending linearly, for example. The nozzle 21 is located at a position above the reaction containers 14 held by the holder 12. The dispensing unit 20 can move the nozzle 21 in the vertical direction, for example. The upper end of the nozzle 21 is connected to a pump. The dispensing unit 20 can aspirate liquid from the tip (that is, the lower end) of the nozzle 21 by the negative pressure from the pump.

The dispensing unit 20 inserts the nozzle 21 into the reaction container 14 after centrifugation to aspirate the supernatant. The nozzle 21 is inserted to be close to the inner bottom of the reaction container 14 in order to reduce the amount of the supernatant left inside the reaction container 14. For example, the tip of the nozzle 21 comes into contact with the inner bottom surface of the reaction container 14. By the nozzle 21 aspirating the supernatant, almost the entire amount of the supernatant inside the reaction container 14 is removed from the reaction container 14. Since the precipitate PP is settled, shifted to the inner peripheral surface side of the reaction container 14 due to the restriction member 15, it is less likely for the nozzle 21 to suck in the precipitate PP when aspirating the supernatant.
to suck in the precipitate PP when aspirating the supernatant.

### [Specific Configuration Example of Specimen Preparation Device]

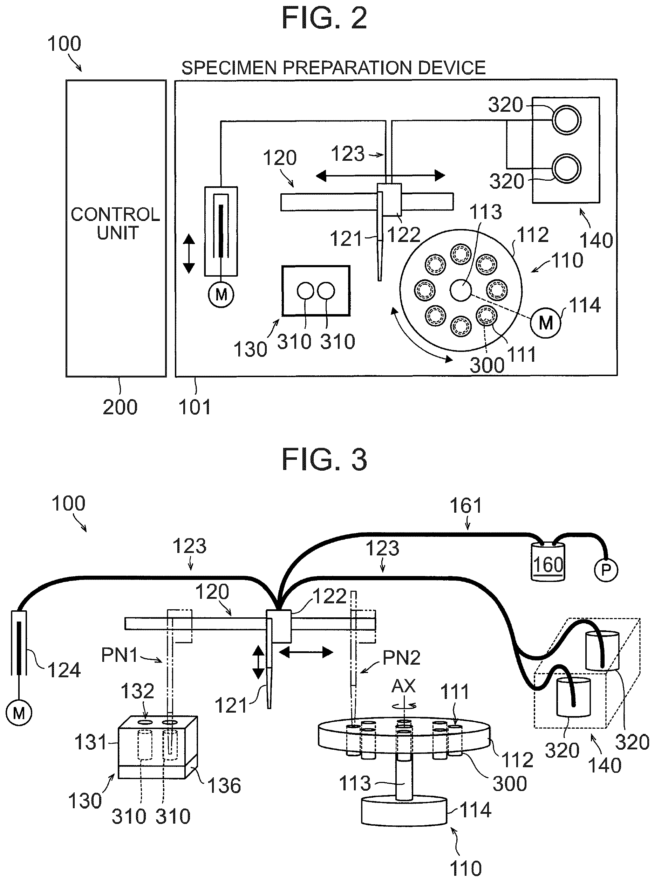

A specific configuration example of the specimen preparation device 100 is described in detail with reference to FIGs. 2 to 30. In the examples of FIGs. 2 to 30, the samples in the specimen preparation device 100 are whole blood, and the test substances are specific cells in blood. The specimen preparation device 100 stains test substances in the sample with labeling antibodies to prepare measurement specimens. The measurement specimens are prepared as specimens for optical measurement by flow cytometry, for example.

### (Overall Configuration of Specimen Preparation Device)

As illustrated in FIG. 2, the specimen preparation device 100 includes a centrifugation unit 110, a dispensing unit 120, and a reagent setting part (130, 140). The specimen preparation device 100 includes a control unit 200. The specimen preparation device 100 includes a housing 101 containing at least the centrifugation unit 110, the dispensing unit 120, and the reagent setting part. The control unit 200 may be set inside or outside the housing 101.

In FIG. 3, the centrifugation unit 110 includes holders 111 that each hold a reaction container 300, a rotor 112 that supports the holders 111, a rotating shaft 113 connected to the rotor 112, and a rotor drive unit 114 that rotates the rotating shaft 113. The centrifugation unit 110 includes a centrifuge that causes the rotor drive unit 114 to integrally rotate the rotating shaft 113 and the rotor 112, thereby centrifugally separating the contents of the reaction containers 300 held by the holders 111.

The dispensing unit 120 includes a nozzle 121 and a drive unit 122. The reagent setting part includes a first reagent setting part 130 in which first reagent containers 310 can be set. The reagent setting part includes a second reagent setting part 140 in which second reagent containers 320 can be set.

The dispensing unit 120 performs a first dispensing operation to aspirate a first reagent from the first reagent container 310 with the nozzle 121 and to discharge the first reagent into the reaction container 300. The first reagent setting part 130 is placed within the movable range of the nozzle 121.

The drive unit 122 moves the nozzle 121 between an aspirating position PN1 for aspirating a reagent from the first reagent container 310 in the first reagent setting part 130 and a discharging position PN2 for discharging the reagent to the reaction container 300 set in the holder 111 of the centrifugation unit 110. With this configuration, the nozzle 121 only needs to reciprocate between the aspirating position PN1 and the discharging position PN2, so that the movement range of the nozzle 121 can be minimized. As a result, the specimen preparation device 100 can be downsized.

The dispensing unit 120 is connected through a flow path 123 to the second reagent containers 320 set in the second reagent setting part 140. The dispensing unit 120 performs a second dispensing operation to send a second reagent from the second reagent containers 320 to the nozzle 121 through the flow path 123 and to discharge the second reagent into the reaction container 300. The second reagent setting part 140 is located outside the moving range of the nozzle 121.

The dispensing unit 120 is configured to perform the first dispensing operation and the second dispensing operation using one nozzle 121. As a result, the structure of the dispensing unit 120 can be simplified and the dispensing unit 120 can be downsized as compared with the configuration in which the first dispensing operation and the second dispensing operation are executed using different nozzles. The dispensing unit 120 may separately include a first nozzle for dispensing the first reagent and a second nozzle for dispensing the second reagent.

The first reagent setting part 130 includes a box-shaped setting part main body 131 that houses the first reagent container 310 in a light-shielded state. The setting part main body 131 includes insertion openings 132 that can be opened and closed for the nozzle 121 to access the inside of the first reagent containers 310. Note that the "light-shielded state" means that there is a dark room the level of which is equal to or higher than the one required to store the first reagent. As a result, the first reagent can be prevented from being exposed to external light. This makes it possible to prevent the first reagent from deteriorating due to external light.

The first reagent setting part 130 includes a temperature adjustment unit (reagent-temperature adjustment unit 136) that controls the temperature of the first reagent containers 310. Therefore, the temperature of the first reagent can be maintained at a temperature suitable for storage. This makes it possible to effectively prevent degradation or deterioration of the first reagent, of which dispensing amount is smaller than that of the second reagent and which tends to affect the quality of prepared specimens.

The second reagent setting part 140 is configured to hold the second reagent containers 320 at room temperature and in a non-light-shielded state. The "non-light-shielded state" means that the second reagent setting part 140 does not have a dark room, and the second reagent setting part 140 may have a cover or a housing that does not have a light shielding structure to prevent the intrusion of external light. The second reagent setting part 140 is not provided with a temperature adjustment unit to control the temperature of the second reagent containers 320. Therefore, the second reagent setting part 140 does not need to have a heat insulating structure or a structure to prevent the intrusion of external light. Thus, the second reagent setting part 140 can be downsized. Accordingly, the specimen preparation device 100 can be downsized.

In the example of FIG. 3, the dispensing unit 120 is configured to aspirate, with the nozzle 121, supernatant in the reaction containers 300 after centrifuged by the centrifugation unit 110.

Thus, the dispensing unit 120 can not only perform the first dispensing operation of the first reagent and the second dispensing operation of the second reagent, but also perform a supernatant aspirating operation. Thus, the specimen preparation device 100 can be effectively downsized as compared with the case where the specimen preparation device 100 has a dedicated mechanism for removing the supernatant in the reaction containers 300.

In FIG. 3, the specimen preparation device 100 includes a waste liquid tank 160 rand a waste liquid flow path 161 that connects the waste liquid tank 160 to the nozzle 121. The dispensing unit 120 is configured to send the supernatant aspirated by the nozzle 121 to the waste liquid tank 160 through the waste liquid flow path 161.

Thus, since it is not necessary to provide a section that stores the aspirated supernatant in the portion that moves in an integrated fashion with the nozzle 121, the dispensing unit 120 can be downsized. Accordingly, even in the case where the supernatant after centrifugation is aspirated by the nozzle 121, the space allocated for the movement of the nozzle 121 can be reduced.

### (Dispensing Unit)

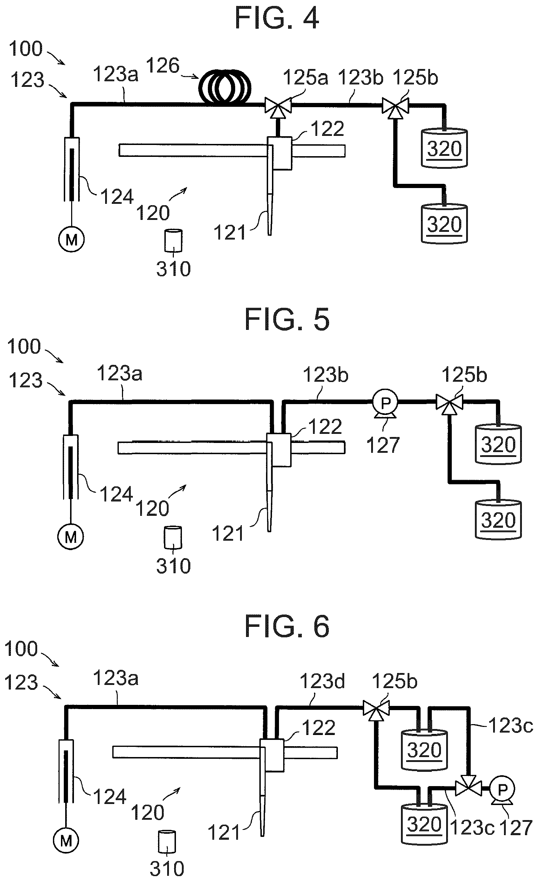

FIGs. 4 to 6 each illustrate a configuration example of the dispensing unit 120.

FIGs. 4 to 6 each illustrate an example in which the first dispensing operation is performed by the operation of a first pump 124. In FIGs. 4 to 6, the dispensing unit 120 includes the first pump 124 connected to the nozzle 121. In the first dispensing operation, the dispensing unit 120 aspirates the first reagent into the nozzle 121 by the aspiration operation of the first pump 124, and discharges the first reagent by the discharging operation of the first pump 124. Thus, the first dispensing operation can be performed simply by directly discharging the first reagent aspirated from the nozzle.

The pump (first pump 124) performs the aspiration operation when the nozzle 121 is at the aspirating position PN1 (see FIG. 3), and performs the discharging operation when the nozzle 121 is at the discharging position PN2 (see FIG. 3). Thus, the dispensing operation can be performed simply by directly discharging the reagent aspirated from the nozzle at the discharging position PN2 (see FIG. 3).

The first pump 124 is preferably a positive-displacement pump capable of accurately quantitatively dispensing the first reagent, of which dispensing amount is small. The first pump 124 is, for example, a syringe pump. In this case, it is possible to accurately quantitatively dispense the first reagent, of which dispensing amount is small. The first pump 124 may be a diaphragm pump, a tube pump, or the like.

FIGs. 4 to 6 illustrate different configuration examples for carrying out the second dispensing operation.

In the example of FIG. 4, the dispensing unit 120 includes a branching unit 125a connected to the nozzle 121, a first flow path 123a that connects the first pump 124 to the branching unit 125a, and a second flow path 123b that connects the second reagent containers 320 to the branching unit 125a. In the first dispensing operation, the dispensing unit 120 causes the first pump 124 to aspirate and discharge the first reagent from the nozzle 121 through the branching unit 125a. In the second dispensing operation, the dispensing unit 120 causes the first pump 124 to aspirate the second reagent in a second reagent container 320 through the branching unit 125a and the second flow path 123b until the second reagent enters the first flow path 123a, and discharge the second reagent from the nozzle 121 through the branching unit 125a.

Thus, both the first and second dispensing operations can be executed by the first pump 124. Since it is not necessary to provide a dedicated pump for each of the first dispensing operation and the second dispensing operation, the device configuration can be simplified and the specimen preparation device 100 can be downsized.

The branching unit 125a includes a valve configured to be able to switch between a first state where the nozzle 121 is connected to the first flow path 123a, a second state where the nozzle 121 is connected to the second flow path 123b, and a third state where the first flow path 123a is connected to the second flow path 123b. The branching unit 125a may include, for example, a three-way valve, an on-off valve, or the like. In the first state, the second flow path 123b and the nozzle 121 are disconnected. In the second state, the first flow path 123a and the nozzle 121 are disconnected. In the third state, the first and second flow paths 123a and 123b are disconnected from the nozzle 121, but the first and second flow paths 123a and 123b communicate with each other.

In the first dispensing operation, with the branching unit 125a in the first state, the first pump 124 aspirates the first reagent into the nozzle 121. The first reagent, of which dispensing amount is small, can be contained in the space between the tip of the nozzle 121 and the branching unit 125a. With the branching unit 125a remaining in the first state, the first reagent is sent from the first flow path 123a to the nozzle 121 by the discharging operation of the first pump 124. In the second dispensing operation, with the branching unit 125a in the first state, the aspiration operation of the first pump 124 causes the total amount of the second reagent to be dispensed to move through the second flow path 123b into a portion of the first flow path 123a between the branching unit 125a and the first pump 124. The first flow path 123a may be provided with a storing portion 126 to provide a capacity to store the second reagent, of which dispensing amount is large. The storing portion 126 may be formed of an additional length part provided by extending the path length of the first flow path 123a, for example. Next, the branching unit 125a is switched from the second state to the first state, and the second reagent is sent from the first flow path 123a to the nozzle 121 by the discharging operation of the first pump 124.

In the case where the second reagent setting part 140 has a plurality of second reagent containers 320, the second flow path 123b is a flow path having branches connected to the respective second reagent containers 320. The second flow path 123b may be provided with a branching unit 125b for selecting a second reagent containers 320 to be made to communicate with the branching unit 125a among the second reagent containers 320.

In the example of FIG. 5, the dispensing unit 120 includes a second pump 127 connected to the nozzle 121 and the second reagent containers 320 through a flow path. In the second dispensing operation, the dispensing unit 120 causes the second pump 127 to aspirate the second reagent from a second reagent container 320 and send the second reagent to the nozzle 121. Thus, the second reagent can be sent to the nozzle 121 simply by connecting the second pump 127 to the nozzle 121 through the flow path 123. Since no pump needs to be provided to the portion that moves in an integrated fashion with the nozzle 121, the dispensing unit 120 can be downsized. Accordingly, the space allocated for the movement of the nozzle 121 can be reduced.

The second pump 127 has a larger capacity than the first pump 124. The second pump 127 has a higher discharge rate per unit time than the first pump 124. The second pump 127 is fixed separately from the nozzle 121 and is connected to the nozzle 121 through the flow path 123 configured to adapt to the movement of the nozzle 121. The flow path 123 is formed of a deformable and flexible resin liquid-feeding tube, for example. Therefore, since the second pump 127 needs not be provided to the portion that moves in an integrated fashion with the nozzle 121, the dispensing unit 120 can be downsized. Accordingly, the space allocated for the movement of the nozzle 121 can be reduced.

In the example of FIG. 5, the aspiration side of the second pump 127 is connected to the second reagent containers 320, and the discharging side of the second pump 127 is connected to the nozzle 121. The second pump 127 includes, for example, a diaphragm pump set on the flow path 123 connecting the second reagent containers 320 and the nozzle 121. The second pump 127 aspirates the second reagent from a second reagent container 320 into its inside. The second pump 127 feeds the second reagent that moved into its inside to the nozzle 121 by its discharging operation. In a diaphragm pump, the dispensing amount is controlled as an integral multiple of the pump capacity (a multiple of the number of pump operations). Since the dispensing amount of the second reagent is large, even the control as an integral multiple of the pump capacity provides enough quantitative accuracy required.

In the example of FIG. 6, the second reagent containers 320 are connected in the middle of the flow paths connecting the second pump 127 and the nozzle 121. The second pump 127 includes an air pressure pump that sends the second reagent to the nozzle 121 through flow paths 123c and 123d by supplying positive pressure into a second reagent container 320. The second pump 127 supplies positive pressure into a second reagent container 320 through a flow path 123c. The second reagent in the second reagent container 320 is pushed out by the positive pressure into a flow path 123d connected to the nozzle 121. Thus, the second reagent can be dispensed from the nozzle 121 with a simple configuration for only pushing out the second reagent in the second reagent container 320 into the flow path 123d by pressure. In the air pressure pump, the dispensing amount is controlled by controlling the positive pressure supply time (that is, the length of time from opening to closing of the valve) with the supplied positive pressure kept constant.

### (Path of Nozzle Movement)

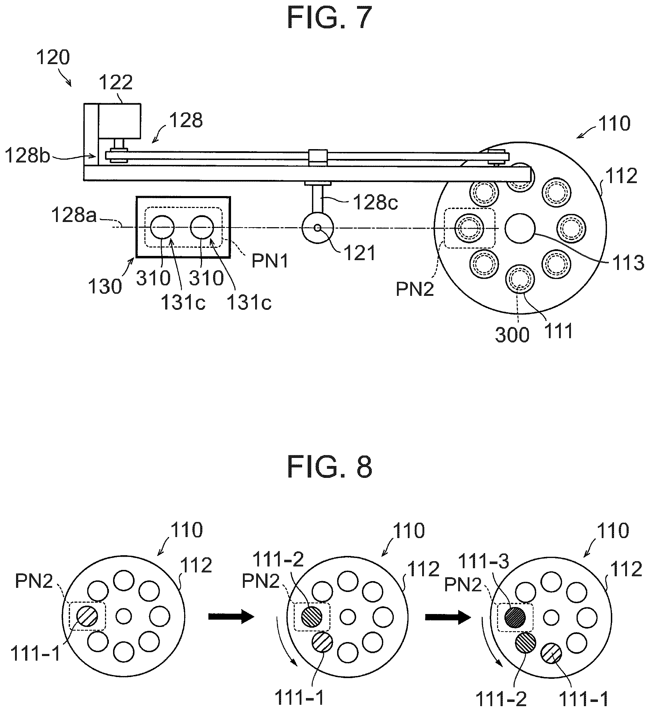

In the example of FIG. 7, the nozzle 121 is provided on a moving mechanism 128. The moving mechanism 128 is fixedly placed in the specimen preparation device 100 and moves the nozzle 121 between the centrifugation unit 110 and the reagent setting part 130.

The moving mechanism 128 is a linear motion mechanism that linearly moves the nozzle 121 between positions above the aspirating position PN1 for aspirating reagents from the reagent containers 310 set in the reagent setting part 130 and a position above the discharging position PN2 for discharging reagents to a reaction container 300 held in the centrifugation unit 110. The moving mechanism 128 is provided so that the nozzle 121 can be reciprocated only in the direction along a movement axis 128a in a horizontal plane. With this configuration, the positions above the aspirating position PN1 and the discharging position PN2 can be connected by the shortest path. As a result, a horizontal space for moving the nozzle 121 can be reduced as much as possible. Thus, the installation area of the specimen preparation device 100 can be effectively reduced.

The moving mechanism 128 includes the drive unit 122 and a horizontal linear motion mechanism 128b. The dispensing unit 120 includes a lift mechanism 128c.

The nozzle 121 is formed of an aspiration tube extending in the vertical direction. The nozzle 121 is held at a position above the first reagent setting part 130 and the reaction containers 300 set in the centrifugation unit 110. The linear motion mechanism 128b is a mechanism that transmits drive force of the drive unit 122 to move the nozzle 121, and movably supports the nozzle 121 along the movement axis 128a via the lift mechanism 128c. The drive unit 122 moves the nozzle 121 along the linear motion mechanism 128b via a transmission mechanism such as a belt-pulley mechanism, for example. The drive unit 122 is, for example, an electric motor. The lift mechanism 128c is configured such that the nozzle 121 can be moved in the vertical direction. The lift mechanism 128c includes an electric motor and a linear motion mechanism. Thus, the nozzle 121 is linearly moved along the movement axis 128a by the drive unit 122 and also moved in the vertical direction by the lift mechanism 128c for aspiration and discharging.

In the example of FIG. 7, the reagent setting part includes container holders 131c that hold reagent containers. These container holders 131c are arranged side by side on the line of the movement axis 128a of the nozzle 121. Therefore, it is not necessary to provide the reagent setting part with a mechanism for moving the container holders 131c onto the movement axis 128a. Thus, the space occupied by the reagent setting part can be prevented from growing even in the case where reagents are aspirated from the reagent containers.

In the case where the container holders 131c are arranged also in the direction orthogonal to the movement axis 128a in the horizontal plane, the specimen preparation device 100 may include a mechanism for moving the reagent setting part in the direction orthogonal to the movement axis 128a.

The movement axis 128a is the locus of the tip of the nozzle 121 in the horizontal plane. The movement axis 128a is a straight line connecting a position above the aspirating position PN1 in the first reagent setting part 130 and a position above the discharging position PN2 in the holder 111 of the centrifugation unit 110. The discharging position PN2 can be set as a position where the distance from the first reagent setting part 130 is the shortest on the movement locus of the holder 111 that is transferred on a circumference centered on the rotating shaft 113. That is, the discharging position PN2 can be set at the intersection of the line segment connecting the insertion openings 132 of the first reagent setting part 130 to the rotation center axis of the holder 111 and the movement locus of the holder 111. Therefore, the movement distance of the nozzle 121 can be minimized.

As illustrated in FIG. 7, the centrifugation unit 110 includes holders 111 arranged in a circumferential direction, and is configured such that each of the reaction containers 300 held by the holders 111 is positioned sequentially at the discharging position PN2 on the movement axis 128a of the nozzle 121 by rotationally moving the holders 111 around the rotation center axis. Thus, the nozzle 121 can perform dispensing to all the reaction containers 300 held by the holders 111 by simply moving to a position above the one discharging position PN2 on the circumferential path on which the holders 111 are moved. Therefore, the horizontal space for moving the nozzle 121 can be effectively reduced.

FIG. 8 illustrates an example in which the centrifugation unit 110 includes eight holders 111. When a reagent is dispensed to the reaction container 300 held in each of the holders 111, the nozzle 121 is positioned above the discharging position PN2 and a first holder 111-1 is positioned at the discharging position PN2 by rotation. The nozzle 121 is moved downward and dispenses the reagent into the reaction container 300 held by the first holder 111-1. Next, the nozzle 121 is moved upward to a position above the reaction container 300, and then a second holder 111-2 is positioned at the discharging position PN2 by rotation. The nozzle 121 is moved downward and dispenses the reagent into the reaction container 300 held by the second holder 111-2. Thereafter, the reagent is similarly dispensed into the reaction container 300 held by a third holder 111-3.

### (Centrifugation Unit)

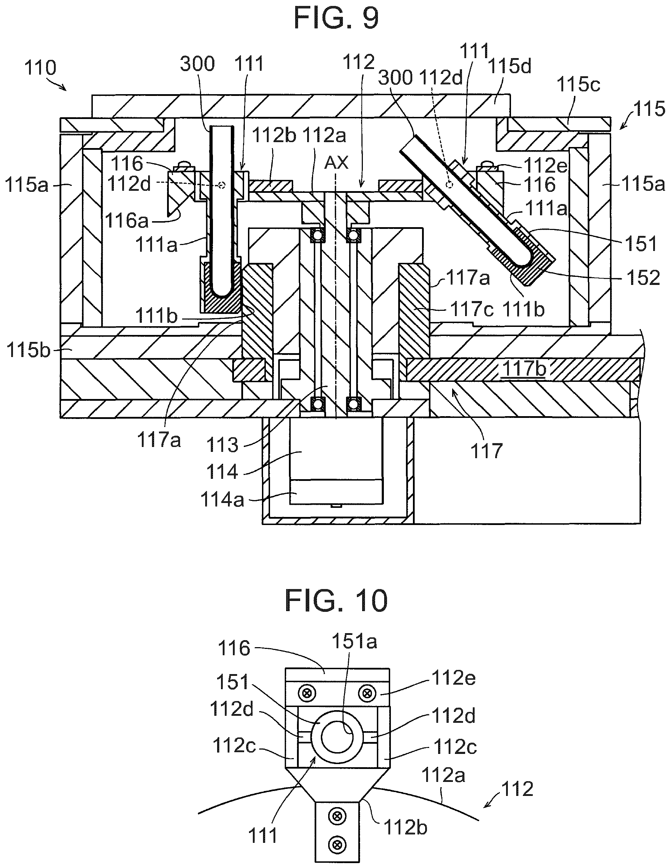

As illustrated in FIG. 9, the centrifugation unit 110 is provided in a housing 115 that houses the rotor 112 provided with holders 111. The housing 115 is formed in a bottomed cylindrical shape having a peripheral wall part 115a surrounding the rotor 112 and a base part 115b forming the bottom surface of the housing 115. The housing 115 also has a top surface part 115c that covers the housing 115 from above. The top surface part 115c is provided with a lid part 115d that covers from above at least the holder 111 at the discharging position PN2 (see FIGs. 3, 7, and 8) so as to be openable and closable. The lid part 115d is configured such that the upper part of the housing 115 can be opened and closed by a drive source such as an electric motor. The housing 115 and the lid part 115d are made of heat insulating materials.

The rotating shaft 113 extends in the vertical direction and passes through the base part 115b. The upper end of the rotating shaft 113 is connected and fixed to the rotor 112. The lower end of the rotating shaft 113 passes through the base part 115b and is connected to the rotor drive unit 114 positioned below the base part 115b.

The rotor drive unit 114 includes an electric motor and rotates the rotor 112. The rotor drive unit 114 rotates the rotating shaft 113 to rotate the rotating shaft 113, the rotor 112, and the holders 111 on the rotation axis AX.

The centrifugation unit 110 includes a rotation position detector 114a that detects the rotation position of the rotor 112. Thus, each holder 111 can be accurately positioned at the discharging position PN2 (see FIGs. 3, 7, and 8) based on the detection results of the rotation position detector 114a. The control unit 200 (see FIG. 2) controls the drive amount of the rotor drive unit 114 based on the detection results of the rotation position detector 114a, thereby controlling the position of each holder 111 in the circumferential direction. The rotor drive unit 114 is, for example, a pulse motor, and the rotation position detector 114a is, for example, an origin sensor for the rotation angle of the rotor drive unit 114. The control unit 200 can control the rotor drive unit 114 so as to position a desired holder 111 at a desired rotation position in the circumferential direction (for example, the discharging position PN2 or a container setting position) based on the rotation angle of the rotor 112 per pulse and the detected rotation angle between the origin angle and a target angle. The rotation position detector 114a may be a rotary encoder.

The centrifugation unit 110 is a swing rotor centrifuge. The rotor 112 swingably supports the holders 111 that hold the reaction containers 300. The holder 111 is provided so as to hang downward from the rotor 112. The rotor 112 supports an upper portion of the holder 111 as the swing axis. The rotor 112 includes a disk part 112a that extends in the horizontal direction at the upper end portion of the rotating shaft 113. As illustrated in FIG. 10, for example, the rotor 112 includes fixed parts 112b fixed to outer peripheral portions of the disk part 112a, pairs of shaft supports 112c extending from each fixed part 112b and arranged on both sides in the circumferential direction of the holder 111, and swing shafts 112d extending from the respective shaft supports 112c to support the holder 111. Thus, the holder 111 is swingably supported by the swing shafts 112d from both sides in the circumferential direction. The rotor 112 is also provided with mounting parts 112e each to connect radially outer distal-end portions of the pair of shaft supports 112c.

### <Restriction Member>

Referring back to FIG. 9, the centrifugation unit 110 includes restriction members 116 that restrict the tilt angle of the reaction container 300 by coming into contact with the holder 111 during the rotation of the rotor 112. In FIG. 9, the holder 111 on the left side illustrates a rotor 112 that is not rotating, and the holder 111 on the right side illustrates a rotor 112 during rotation. The restriction member 116 is attached to the lower surface side of each mounting part 112e (see FIG. 10) of the rotor 112. The restriction members 116 may be integrally formed with the rotor 112.

The restriction member 116 is provided so as to come into contact with the holder 111 at a position between the bottom portion of the tilted holder 111 and the swing shafts 112d during the rotation of the rotor 112.

To be more specific, the holder 111 has a tubular shape into which the reaction container 300 can be inserted from its upper end. The restriction member 116 is provided so as to come into contact with a portion of the outer peripheral surface 111a between the bottom portion and the upper end portion of the holder 111 during the rotation of the rotor 112. In this configuration, the restriction members 116 can be arranged within the range of the maximum radius of the swung holders 111. Thus, the centrifuge does not have to be large in size. Since the restriction member 116 comes into contact with the outer peripheral surface 111a instead of the bottom or upper end of the holder 111, the restriction member 116 and the holder 111 can be easily and reliably brought into contact with each other.

The restriction member 116 has an inclined surface 116a that comes into contact with the holder 111 and is adapted to the tilt angle of the reaction container 300. Thus, the holder 111 can be restricted in a state of being swung to an angle along the inclined surface 116a. When the holder 111 comes into contact with the restriction member 116, small-area contact such as point contact can be avoided. Therefore, the impact at the time of contact can be prevented from being concentrated.

At least a portion of the restriction member 116 that comes into contact with the holder 111 is formed of an impact-resistant material. In the example of FIG. 9, the portion that comes into contact with the holder 111 is the inclined surface 116a. An impact-resistant material means a material that is not easily destroyed by a large momentary force (that is, impact) applied from the outside. Therefore, even if the holder 111 and the restriction member 116 repeatedly come into contact with each other, the tilt angle up to which the angle is restricted can be prevented from changing. The impact resistance can be evaluated by using an impact strength value obtained by an Izod impact test, for example.

At least the portion of the restriction member 116 that comes into contact with the holder 111 is formed of an elastic material. Thus, the elasticity of the restriction member 116 can prevent excessive impact from acting on the holder 111 and the restriction member 116 at the time of contact. The restriction member 116 is made of, for example, a resin material that is an impact-resistant material and also an elastic material. Such a resin material is, for example, POM (polyacetal resin). The resin material may be PC (polycarbonate), nylon, PS (polystyrene), ABS resin, or the like.

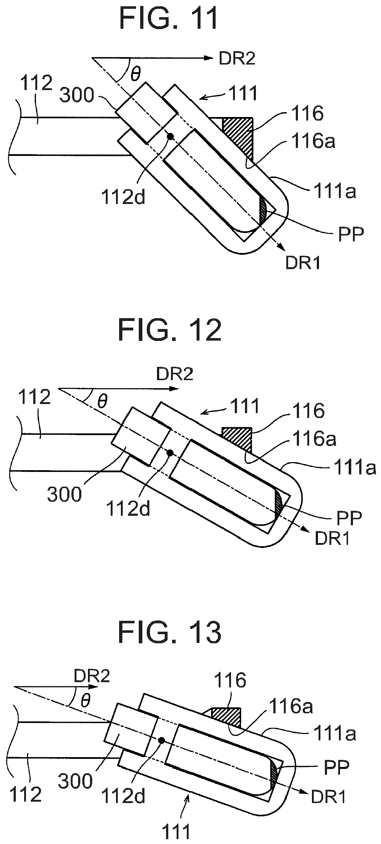

As illustrated in FIG. 11, the restriction member 116 is configured to restrict the tilt angle of the reaction container 300 such that the angle θ between the longitudinal direction DR1 of the reaction container 300 and the centrifugal force direction DR2 applied to the contents of the reaction container 300 during the rotation of the rotor 112 is within a range of 20 to 70 degrees. Therefore, the contents of the reaction container 300 can be settled at a position sufficiently shifted. Thus, during the aspiration of the supernatant, it is possible to effectively prevent the precipitate from being sucked into the nozzle 121. The swing angle of the holder 111 is set at an angle sufficiently larger than 0 degrees (or the horizontal direction), and thereby the maximum radius of the rotor 112 during rotation can be effectively reduced.

In this embodiment, the centrifugal force direction DR2 agrees with the horizontal direction. In the configuration in which the inclined surface 116a comes into contact with the holder 111, the angle θ can be determined by the angle of the inclined surface 116a. The angle θ can be, for example, 20 degrees, 30 degrees, 40 degrees, 45 degrees, 50 degrees, 60 degrees, or 70 degrees. FIG. 11 illustrates an example in which the angle θ is 45 degrees. FIG. 12 illustrates an example in which the angle θ is 30 degrees. FIG. 13 illustrates an example in which the angle θ is 20 degrees. The angle of the inclined surface 116a is different in each of FIGs. 11 to 13.

The closer to 0 degrees the angle θ is, the closer to the centrifugal force direction DR2 the tilt angle of the reaction container 300 is. Thus, the effect of shifting the precipitate within the reaction container 300 and the effect of reducing the maximum radius of the rotor 112 during rotation are smaller. As the angle θ is closer to 90 degrees, the centrifugal force acts toward the inner side surface rather than the bottom of the reaction container 300. Therefore, the area of the formed precipitate is large, making it difficult to aggregate the precipitate in a lump. For this reason, the angle θ should preferably be within the range of 35 degrees to 55 degrees.

In the example of FIG. 9, the restriction member 116 is detachably provided to the rotor 112. Therefore, a plurality of types of restriction members 116 having different shapes (see FIGs. 11 to 13) are interchangeable, and such interchanging of the restriction members 116 enables adjustment of the tilt angle of the reaction container 300 (that is, adjustment of the angle θ). Thus, the tilt angle of the reaction container 300 can be set to an appropriate tilt angle that can prevent the precipitate from being sucked by the nozzle 121, depending on the amount of the precipitate and other factors. In the example of FIG. 10, the restriction member 116 is detachably fixed to the lower surface side of the mounting part 112e of the rotor 112 with fixing parts such as screws. In the example of FIG. 10, one restriction member 116 is provided for each holder 111. Alternatively, one restriction member 116 formed in a ring shape may be provided for the holders 111 arranged in the circumferential direction.

The rotation control of the rotor 112 in the centrifugation unit 110 is performed by the control unit 200 (see FIG. 2). The control unit 200 controls the centrifugation unit 110 such that the centrifugation unit 110 performs centrifugation to settle the contents of the reaction container 300. During centrifugation, the control unit 200, for example, performs control such that the rotor 112 rotates at a predetermined equiangular velocity.

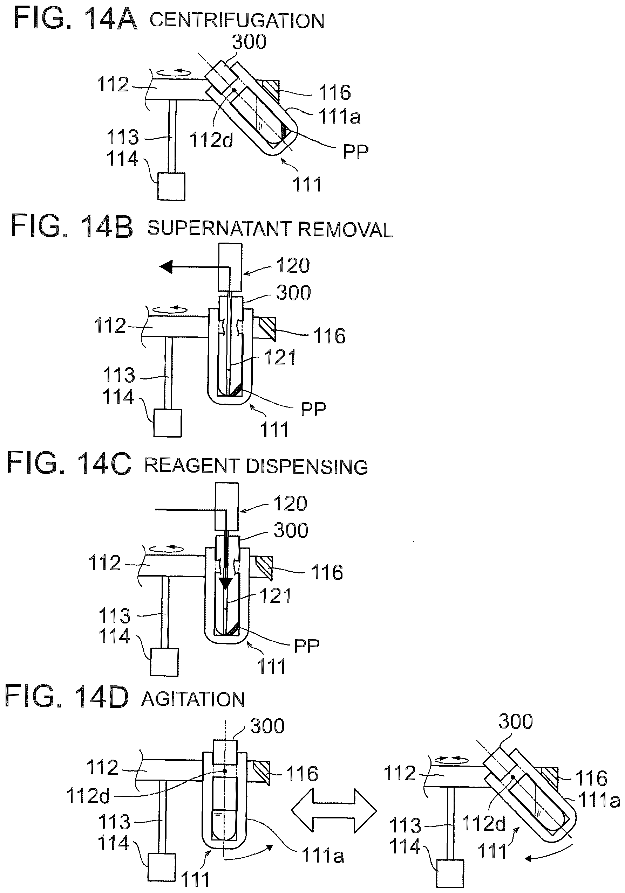

As illustrated in FIG. 14A, the restriction member 116 is configured to keep in contact with the holder 111 when the rotor 112 is rotating for centrifugation of the contents of the reaction container 300. Therefore, the direction of the centrifugal force acting on the contents of the reaction container 300 can be kept constant. As a result, the precipitate PP can be gathered such that the precipitate is not widely distributed within the reaction container 300.

As illustrated in FIG. 14B, after centrifugation, the supernatant in the reaction container 300 is removed by the nozzle 121 of the dispensing unit 120. As illustrated in FIG. 14C, after the supernatant is removed, a reagent is dispensed by the nozzle 121 of the dispensing unit 120. The reaction container 300 contains the precipitate PP and the reagent.

In the configuration example of FIGs. 14A to 14D, when the reagent is dispensed, the centrifugation unit 110 performs agitation. The control unit 200 controls the centrifugation unit 110, changing the angular acceleration of the rotor 112 such that the contents of the reaction container 300 are agitated.

As illustrated in FIG. 14D, the control unit 200 controls the rotor 112 such that a state in which the holder 111 is in contact with the restriction member 116 and a state in which the holder 111 is away from the holder 111 occur during the agitation. Thus, the contents precipitated after the centrifugation and the dispensed reagent can be mixed by agitation. The collision between the holder 111 and the restriction member 116 applies an impact to the holder 111. The impact applied to the holder 111 is transmitted to the reaction container 300 held by the holder 111. The impact caused by the holder 111 in the non-contact state coming into contact with the restriction member 116 can provide a tapping action on the reaction container 300 held by the holder 111. Tapping is a method of agitating the contents of a vial by flicking the side surface of the vial held by a hand, with a finger to give impact. Since this operation provides both the agitation effect due to change in angular acceleration and the agitation effect due to tapping, it is possible to agitate the contents effectively.

The control unit 200 controls the centrifugation unit 110 to repeatedly change the angular acceleration of the rotor 112 more than once during agitation. The control unit 200 controls the holder 111 such that the contact state and the non-contact state repeatedly occur during agitation. This operation provides the agitation effect by repeated changes in the Euler force due to the angular acceleration. In addition, repeated occurrences of the contact state and the non-contact state provides the agitation effect of several tapping actions. Therefore, it is possible to perform agitation more effectively and efficiently in a short time.

The agitation is performed by intermittent rotation or reciprocating rotation which cause changes in the angular acceleration of the rotor 112 changes. During agitation, the control unit 200 controls the centrifugation unit 110 such that the rotor 112 rotates intermittently or performs reciprocating rotation. In the intermittent rotation, rotation and stopping are repeated in the same direction. In the reciprocating rotation, rotation in one direction and rotation the other direction are repeated. With these operations, the angular acceleration can be effectively changed by intermittent rotation in a fixed rotation direction or reciprocating rotation including rotation in one direction and rotation in the other direction.

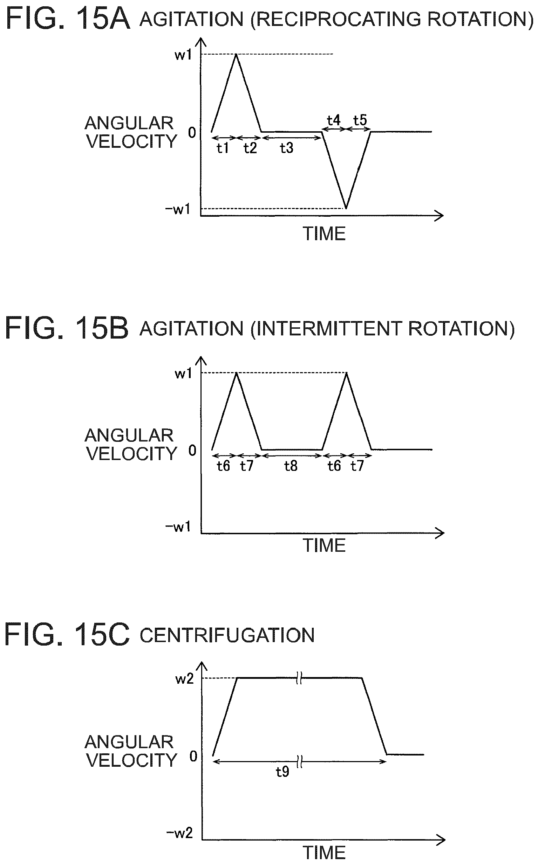

FIGs. 15A to 15C are graphs each illustrating time changes in the angular velocity during agitation. The vertical axis represents the angular velocity, while the horizontal axis represents time. Positive values on the vertical axis indicate rotation in one direction (for example, clockwise), and negative values indicate rotation in the other direction (for example, counterclockwise).

FIG. 15A illustrates an example of reciprocating rotation. The rotor 112 rotates in one direction while being accelerated during time t1 and decelerated during time t2. After time t3 elapsed during which the rotor 112 is substantially stopped, the rotor 112 rotates in the other direction while being accelerated during time t4 and decelerated during time t5. Since acceleration and deceleration in rotation in one direction and acceleration and deceleration in rotation in the other direction are alternately repeated, Euler forces in reversed directions act repeatedly on the contents of the reaction container 300. The maximum angular velocities w1 and -w1 are set large enough for the holder 111 to come in contact with the restriction member 116 due to the centrifugal force. The holder 111 is put in the non-contact state when the angular velocity is around 0. Both in the acceleration and deceleration in the rotation in one direction and in the acceleration and deceleration in the rotation in the other direction, the holder 111 collides with the restriction member 116 and causes tapping.

FIG. 15B illustrates an example of intermittent rotation in one direction. The rotor 112 rotates in one direction while being accelerated during time t6 and decelerated during time t7. After time t8 elapsed during which the rotor 112 is substantially stopped, the rotor 112 is accelerated and decelerated in the one direction again. By repeating these operations, Euler forces in reversed directions acts repeatedly on the contents of the reaction container 300. The magnitude of the angular velocity may be the same as in FIG. 15A. With the above setting, every time the one intermittent rotation operation (during time t6 + time t7) is performed, the holder 111 collides with the restriction member 116 and causes tapping. Note that intermittent rotation may be performed in the other direction.

The agitation of FIG. 14D is performed as illustrated in FIG. 15B. As illustrated in FIGs. 14A to 14D, the control unit 200 controls the centrifugation unit 110 and the dispensing unit 120 such that a reagent is dispensed into the reaction container 300 after aspiration of supernatant by the dispensing unit 120, and that the contents in the holder 111 are agitated. Thus, a lump of the precipitate PP settled by centrifugation can be effectively dispersed in the dispensed reagent. As a result, it is possible to reduce variations in the reaction between the sample and the reagent.

FIG. 15C illustrates an example of rotation during centrifugation. During the centrifugation, an angular velocity is kept in rotation in one direction or rotation in the other direction for a predetermined time t9. FIG. 15C illustrates an example of rotation in one direction, but the rotation may be in the other direction. The maximum angular velocity w2 is set large enough for the holder 111 to come in contact with the restriction member 116. During the predetermined time t9, the holder 111 is kept in contact with the restriction member 116 at least during the rotation at the angular velocity w2. Although schematically illustrated in FIG. 15C, the angular velocity w2 during centrifugation is larger than the angular velocity w1 during agitation.

### <Temperature control unit>

In the example illustrated in FIG. 9, the centrifugation unit 110 includes the temperature adjustment unit 117. The temperature adjustment unit 117 includes a heat transfer surface 117a provided so as to be adjacent to and face a surface of the holder 111.

In FIG. 9, the temperature adjustment unit 117 includes a main body part 117b that performs heating or cooling and a heat transfer member 117c connected to the main body part 117b. The temperature adjustment unit 117 transfers high-temperature or low-temperature heat energy generated in the main body part 117b to the holder 111 through the heat transfer member 117c.

The main body part 117b includes a Peltier element. This makes it possible to downsize the main body part 117b. As compared with the case where the main body part 117b is provided with a heat exchanger that circulates a heat medium, uniform temperature control can be performed for the heat transfer member 117c. Therefore, temperature control can be performed with high accuracy for the contents of the reaction container 300.

In FIG. 9, the heat transfer member 117c is provided on the outer periphery of the rotating shaft 113 and has the heat transfer surface 117a. The main body part 117b is located below the heat transfer member 117c. The heat transfer surface 117a faces a side surface 111b of the holder 111 in the radial direction. Thus, the main body part 117b for heating or cooling need not be provided on the outer periphery of the rotating shaft 113. Therefore, the main body part 117b can be easily laid out without any design restriction. The heat transfer surface 117a is formed by the side surface of the heat transfer member 117c, and the surface 111b of the holder 111 on the rotating shaft 113 side can be made to face the heat transfer surface 117a.

The main body part 117b is located below the base part 115b. The main body part 117b is in contact with the lower end portion of the heat transfer member 117c provided so as to pass through the base part 115b. Thus, the main body part 117b is in direct contact with the heat transfer member 117c and transfers heat by heat conduction.

The heat transfer member 117c is provided so as to be surrounded by the holders 111, the rotor 112, and the rotating shaft 113. The heat transfer member 117c has the heat transfer surface 117a on its outer surface on the holder 111 side. Thus, the heat transfer member 117c can be accommodated in a space between the rotating shaft 113 and the holders 111. Therefore, it is possible to prevent the centrifuge (centrifugation unit 110) from being large in overall size even in the case where the centrifuge has the heat transfer member 117c.

The holder 111 also includes a holder main body 151 with a holding hole 151a (see FIG. 10) that receives the reaction container 300. The holder 111 includes a holder heat transfer section 152 provided to the holder main body 151 and having a surface 111b adapted to face the heat transfer surface 117a. The holder heat transfer section 152 has a higher thermal conductivity than the holder main body 151. Thus, the holder heat transfer section 152 having high thermal conductivity can efficiently transfer heat between the holder heat transfer section 152 and the heat transfer surface 117a. Thus, the temperature control function for the contents of the reaction container 300 held by the holder 111 can be effectively improved. The outer peripheral surface 111a that comes into contact with the restriction member 116 is the outer peripheral surface of the holder main body 151.

The holder main body 151 is formed of a resin material, for example, and the holder heat transfer section 152 is formed of a metal material, for example. The holder main body 151 is made, for example, of POM (polyacetal resin), and the holder heat transfer section 152 is made of aluminum or an aluminum alloy. The thermal conductivity of POM is about 0.25 [W/m·K], and the thermal conductivity of aluminum is about 236 [W/m·K]. Note that the reaction container 300 is formed of PS (polystyrene), for example, and the thermal conductivity of PS is 0.10 [W/m·K] to 0.14 [W/m·K],

The surface 111b of the holder heat transfer section 152 extends along the heat transfer surface 117a. Thus, uniform heat transfer can be performed between the heat transfer surface 117a and the holder heat transfer section 152. Therefore, variations in the temperature of the contents of the reaction container 300 can be effectively reduced. The surface 111b of the holder heat transfer section 152 and the heat transfer surface 117a face each other in the radial direction.

In the example of FIG. 9, the holder heat transfer section 152 is provided at a lower part of the holder main body 151 and constitutes the lower end of the holding hole 151a. That is, the holder main body 151 has a through-hole formed therein and corresponding to from the upper end to an intermediate position of the holding hole 151a. The holder heat transfer section 152 has a recess formed therein and corresponding to from the intermediate position to the lower end of the holding hole 151a, which is continuous with the lower end of the through-hole in the holder main body 151. The holding hole 151a is formed in a bottomed cylindrical shape that is opened at the top and closed at the bottom by connecting the through-hole and the recess. Therefore, the holder heat transfer section 152 is configured to come into direct contact with the reaction container 300 without the holder main body 151 interposed therebetween. Thus, the temperature control function can be effectively improved for the contents of the reaction container 300 held by the holder 111.

As represented by the holder 111 on the right side of FIG. 9, the holder 111 swings in a direction away from the heat transfer surface 117a during the rotation of the rotor 112. As represented by the holder 111 on the left side of FIG. 9, the holder 111 is provided on the rotor 112 so as to be located at a position close to the heat transfer surface 117a when the rotor 112 is stopped.

With this configuration, when the rotor 112 is stopped, the heat transfer surface 117a and the holder 111 come close to each other. Thus, heat transfer can be efficiently performed between the heat transfer surface 117a and the holder 111. Accordingly, a step of reacting a reagent with the sample can be performed quickly. Since steps other than the reaction step such as a centrifugation step are performed during the rotation of the rotor 112, there is no need to perform heat transfer, leading to no influence on the temperature control function.

When the rotor 112 is stopped, the surface 111b of the holder 111 is positioned to be in contact with the heat transfer surface 117a or to be not in contact with but close to the heat transfer surface 117a. Thus, heat transfer between the holder 111 and the heat transfer surface 117a can be performed as efficiently as possible. Therefore, the temperature of the contents of the reaction container 300 can be controlled quickly.

The distance between the surface 111b of the holder 111 and the heat transfer surface 117a when the rotor 112 is stopped is 10 mm or less. This setting ensures heat transfer efficiency by heat radiation. In the case where the distance between the surface 111b of the holder 111 and the heat transfer surface 117a is 0 mm, that is, these are in contact with each other, direct heat transfer by heat conduction occurs. In consideration of any dimensional error or assembly error of the heat transfer member 117c, the rotor 112, and the holders 111, the surface 111b of the holder 111 and the heat transfer surface 117a may be slightly separated from each other. For example, the distance between the surface 111b of the holder 111 and the heat transfer surface 117a may be set to 5 mm, 3 mm, 2 mm, or 1 mm. The distance between the surface 111b of the holder 111 and the heat transfer surface 117a may be set to 0 mm. Since the holder 111 is swingable, even if the position of the heat transfer surface 117a is slightly displaced to the outer peripheral side from the design due to manufacturing errors, nothing happens except that the holder 111 comes into contact with the heat transfer surface 117a at a position displaced outward accordingly.

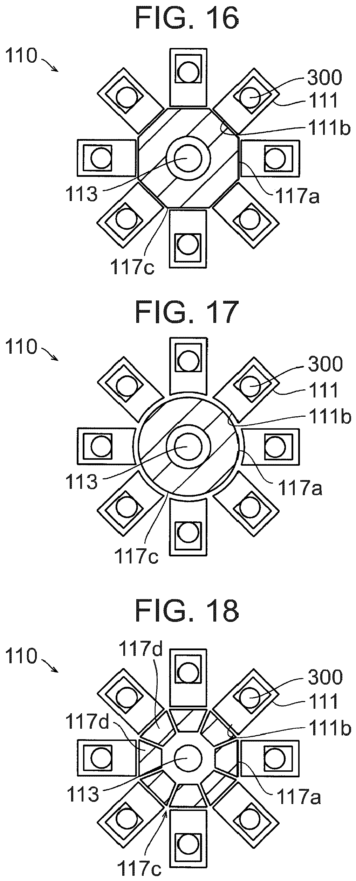

FIGs. 16 to 18 illustrate variations in the shape of the heat transfer surface 117a of the heat transfer member 117c and the shape of the surface 111b of the holder 111. In the case where the holder 111 includes the holder heat transfer section 152 as illustrated in FIG. 9, the surface 111b of the holder 111 in FIGs. 16 to 18 is the surface of the holder heat transfer section 152.

In the example of FIG. 16, the heat transfer member 117c has a tubular shape surrounding the rotating shaft 113, and at least a part of the outer peripheral surface 111a (see FIG. 9) is the heat transfer surface 117a. The heat transfer member 117c is formed in a hollow polygonal column shape having a number of faces corresponding to the number of holders 111. Each surface of the polygonal column-shaped heat transfer member 117c is the heat transfer surface 117a. With this configuration, the heat transfer surfaces 117a can be formed on the outer peripheral surface of the heat transfer member 117c so as to face the respective surfaces 111b of the holders 111.

In the example of FIG. 17, the heat transfer member 117c has a cylindrical shape, and the surface 111b of the holder 111 facing the heat transfer member 117c has a circular concave surface. Thus, the heat transfer surface 117a and the holder 111 can reliably face each other regardless of the position of the holder 111 in the circumferential direction. Even in the case where a plurality of holders 111 are provided in the circumferential direction, one heat transfer member 117c makes it possible for the heat transfer surface 117a and the holders 111 to face each other in the radial direction.

Each concave surface has a circular arc surface centered on the rotating shaft 113 of the holder 111 and concentric with the heat transfer surface 117a which is an outer peripheral surface of the heat transfer member 117c. Each concave surface is parallel to the heat transfer surface 117a of the heat transfer member 117c.

In the example of FIG. 18, the heat transfer member 117c includes heat transfer blocks 117d as many as the holders 111. The heat transfer blocks 117d are arranged side by side along the outer circumference of the rotating shaft 113 so as to face the respective holders 111. Each of the heat transfer blocks 117d is connected to the main body part 117b. With this configuration, the holders 111 and the heat transfer blocks 117d can be provided to be paired. Thus, In the case where a plurality of holders 111 are provided in the circumferential direction, it is possible to provide a temperature control function for the contents of the reaction container 300 held by each holder 111. The example of FIG. 18 has a structure in which the heat transfer member 117c in FIG. 16 is separated to correspond to each heat transfer surface 117a.

In the examples of FIGs. 16 and 18, each heat transfer surface 117a has a flat surface, and the surface 111b of the holder 111 facing the heat transfer member 117c has a flat surface. Thus, it is possible to make the heat transfer surface 117a and the surface 111b of the holder 111 face each other with their flat surfaces. Therefore, heat transfer to the surface 111b of the holder 111 can be performed uniformly and efficiently. In the examples of FIGs. 16 and 18, the heat transfer surface 117a and the surface 111b of the holder 111 are flat surfaces extending in parallel with each other.

Referring back to FIG. 9, the temperature adjustment unit 117 is controlled by the control unit 200 (see FIG. 2). The control unit 200 performs temperature control for the contents of the reaction container 300. The temperature is controlled to be suitable for reacting the sample and the reagent in the reaction container 300. The temperature can be different from room temperature.

The control unit 200 controls the main body part 117b such that the heat transfer surface 117a is at 0 °C to 10 °C, for example. Thus, even in the case where the temperature is controlled to be lower than the standard room temperature (about 20 °C), the contents of the reaction container 300 can be quickly controlled to have the target temperature by the temperature adjustment unit 117.

The control unit 200 sets the temperature of the heat transfer surface 117a such that it agrees with the temperature in the reagent setting part, for example. The control unit 200 controls the main body part 117b of the centrifugation unit 110 such that the heat transfer surface 117a is at a specified temperature, and controls the reagent-temperature adjustment unit 136 such that the inside of the first reagent setting part 130 is at the specified temperature mentioned above. Thus, the temperature of the reagent to be dispensed into the reaction container 300 can be set to agree with the target temperature for the temperature adjustment unit 117 in the centrifugation unit 110. Therefore, the temperature of the contents of the reaction container 300 does not deviate from the target temperature depending on the temperature of the reagent to be dispensed. Thus, the temperature of the contents of the reaction container 300 can be controlled easily and quickly.

In one example, the sample is blood, and the reagent is an antibody reagent. Antibody reagents are easily affected by temperature. Therefore, according to this embodiment capable of quickly performing temperature control of the contents of the reaction container 300, variations due to the temperature in the reaction step between blood and the antibody reagent can be reduced. Thus, quality variation in specimen preparation can be effectively reduced.

In one example, the storage temperature for the antibody reagent stored in the first reagent container 310 is about 4 °C, and the reaction temperature for it is about 4 °C, for example. In this case, the control unit 200 controls the main body part 117b and the reagent-temperature adjustment unit 136 such that that the heat transfer surface 117a and the first reagent setting part 130 are at 4 °C ± E °C. E represents an allowable error.

As described above, the specimen preparation device 100 includes the centrifugation unit 110 including the centrifuge provided with the temperature adjustment unit 117, the dispensing unit 120 that dispenses reagents into the reaction container 300, and the control unit 200 that controls the temperature adjustment unit 117. Thus, it is possible to improve the temperature control function for the contents of the reaction container 300 at the time when the sample and the reagent are reacted in the reaction container 300 held in the centrifuge.

### <Type and Arrangement of Containers>

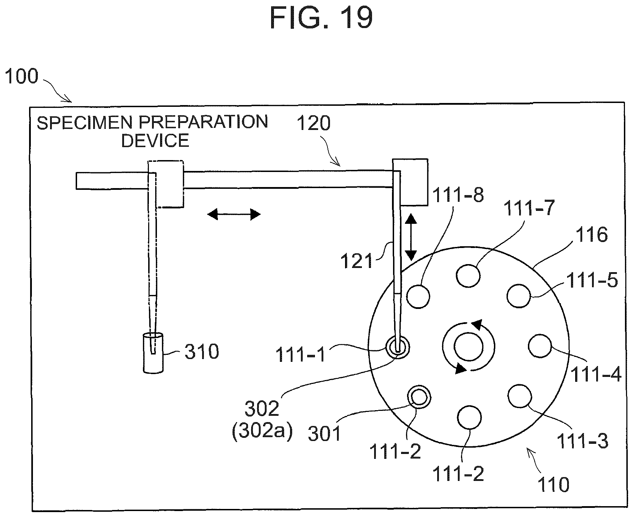

As illustrated in FIG. 19, the reaction containers 300 configured to be held by the holder 111 include a first container 301 and a second container 302. In this embodiment, the rotor 112 is configured to hold the same types of containers as the first and second containers 301 and 302 in the holders 111.

The first container 301 is a reaction container 300 that contains a sample. The second container 302 is a reaction container 300 that contains no sample. The second container 302 includes a cleaning container 302a used for cleaning the nozzle 121. The second container 302 also includes a balancer for balancing the weight with the first container 301.

### <Nozzle Cleaning>

In the example of FIG. 19, the control unit 200 (see FIG. 2) is configured to control the centrifugation unit 110 and the dispensing unit 120 such that in the centrifugation unit 110, a reagent is dispensed into the first container 301 held by the holder 111, and the nozzle 121 is cleaned with a cleaning liquid contained in the second container 302 held by the holder 111. To be more specific, the control unit 200 controls the centrifugation unit 110 and the dispensing unit 120 such that among the containers held by the holders 111, a reagent is dispensed into the first container 301 containing a sample, and the nozzle 121 is cleaned with a cleaning liquid contained in the second container 302 containing no sample.

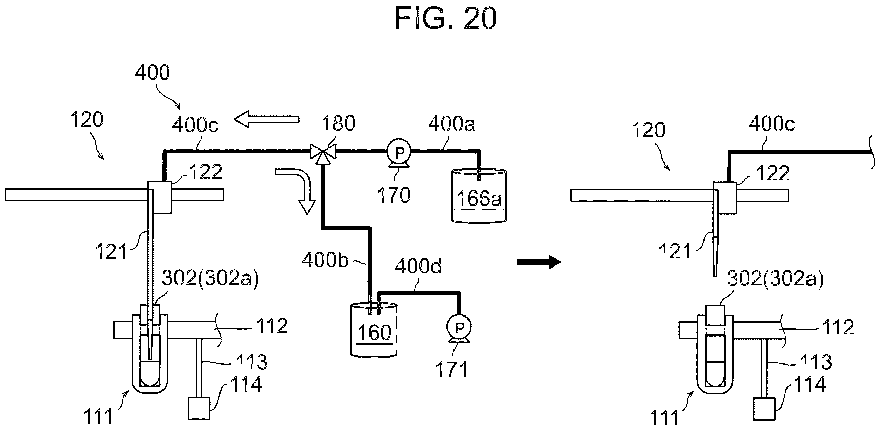

To be more specific, as illustrated in FIG. 20, the control unit 200 (see FIG. 2) controls the centrifugation unit 110 (see FIG. 19) and the dispensing unit 120 such that the cleaning liquid aspirated from a cleaning liquid container 166a is discharged into the second container 302 with the nozzle 121 inserted into the second container 302, and the cleaning liquid discharged into the second container 302 is aspirated to be removed.

In the example of FIG. 20, the dispensing unit 120 includes a first pump 170 that sends the cleaning liquid to the nozzle 121 and a second pump 171 that aspirates the cleaning liquid sent from the first pump 170 by the nozzle 121. The first and second pumps 170 and 171 include diaphragm pumps, for example.

The control unit 200 (see FIG. 2) controls the dispensing unit 120 such that that the cleaning liquid is discharged into the second container 302 by sending the cleaning liquid to the nozzle 121 using the first pump 170. The control unit 200 also controls the dispensing unit 120 such that the nozzle 121 is cleaned by aspirating the cleaning liquid in the second container 302 from the nozzle 121 using the second pump 171.

The dispensing unit 120 includes a switching valve 180 that switches between a first flow path 400a for sending the cleaning liquid with the first pump 170 and a second flow path 400b for aspirating the cleaning liquid sent from the first pump 170 with the second pump 171.

In the example of FIG. 20, the control unit 200 (see FIG. 2) controls the dispensing unit 120, the first pump 170, the second pump 171, and the switching valve 180 to perform a cleaning operation for the nozzle 121 by discharging and aspirating the cleaning liquid through the flow path 400.

The flow path 400 includes the first flow path 400a, the second flow path 400b, a third flow path 400c, and a fourth flow path 400d. The first flow path 400a connects the cleaning liquid container 166a and the switching valve 180. The second flow path 400b connects the switching valve 180 and the waste liquid tank 160. The third flow path 400c connects the switching valve 180 and the nozzle 121. The fourth flow path 400d connects the waste liquid tank 160 and the second pump 171. During the cleaning operation of the nozzle 121, the cleaning liquid flows through the first to third flow paths 400a to 400c, and air flows through the fourth flow path 400d.

The first pump 170 is provided in the first flow path 400a. The second pump 171 is connected to the waste liquid tank 160 by the fourth flow path 400d. The control unit 200 (see FIG. 2) controls the dispensing unit 120 so as to clean the nozzle 121 by switching between the first flow path 400a and the second flow path 400b with the switching valve 180.

In this embodiment, the control unit 200 (see FIG. 2) controls the centrifugation unit 110 and the dispensing unit 120 so as to perform the cleaning operation for the nozzle 121 after dispensing a reagent into the first container 301 and after removing the supernatant in the first container 301.

### <Cleaning of Nozzles after Dispensing Reagent>

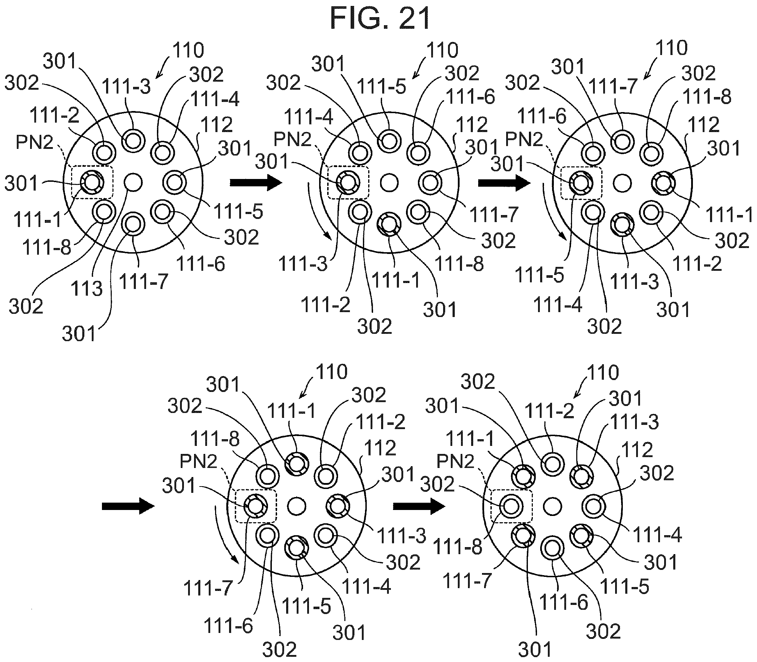

In the example of FIG. 21, the control unit 200 (see FIG. 2) controls the centrifugation unit 110 and the dispensing unit 120 so as to move the first containers 301 to the position of the nozzle 121 by rotating the rotor 112 and dispense a reagent into the first containers 301. The control unit 200 also controls the centrifugation unit 110 and the dispensing unit 120 so as to move a second container 302 to the position of the nozzle 121 by rotating the rotor 112 to clean the nozzle 121.

The control unit 200 (see FIG. 2) controls the centrifugation unit 110 and the dispensing unit 120 so as to dispense the reagent into the first containers 301 arranged in pairs at positions symmetrical with respect to the rotation axis (that is, the rotating shaft 113) of the rotor 112, among the holders 111. In the example of FIG. 21, the first containers 301 are held by the holders 111-1, 111-3, 111-5, and 111-7. The control unit 200 controls the centrifugation unit 110 and the dispensing unit 120 so as to dispense the reagent into the first containers 301 while rotating the rotor 112. The control unit 200 sequentially moves the holders 111-1, 111-3, 111-5, and 111-7 to the discharging position PN2 to dispense the reagent into the first container 301 held by each holder 111.

In the example of FIG. 21, the control unit 200 (see FIG. 2) controls the centrifugation unit 110 and the dispensing unit 120 so as to clean the nozzle 121 using one of second containers 302 arranged in pairs at positions symmetrical with respect to the rotation axis among the holders 111. In the example of FIG. 21, the second containers 302 are held by the holders 111-2, 111-4, 111-6, and 111-8.

After dispensing the reagent into each of the first containers 301, the control unit 200 (see FIG. 2) controls the centrifugation unit 110 and the dispensing unit 120 so as to move the holder 111-8 to the discharging position PN2 by rotating the rotor 112 and clean the nozzle 121 using the second container 302. FIG. 21 illustrates an example in which the nozzle 121 is cleaned using the second container 302 held by the holder 111-8 closest to the holder 111-7 into which the reagent has been dispensed in the previous operation.

To perform centrifugation after cleaning of the nozzle 121, it is preferable that the weights of the holders 111 be balanced in the centrifugation unit 110. Therefore, in this embodiment, the control unit 200 (see FIG. 2) is configured to control the centrifugation unit 110 and the dispensing unit 120 so as to perform centrifugation after the cleaning liquid discharged into the second container 302 is aspirated to be removed.

### <Nozzle Cleaning after Removal of Supernatant>

The control unit 200 (see FIG. 2) controls the centrifugation unit 110 so as to centrifuge the contents of the first container 301, and controls the centrifugation unit 110 and the dispensing unit 120 such that the supernatant in the first containers 301 is aspirated to be removed by rotating the rotor 112, and that the nozzle 121 is cleaned.

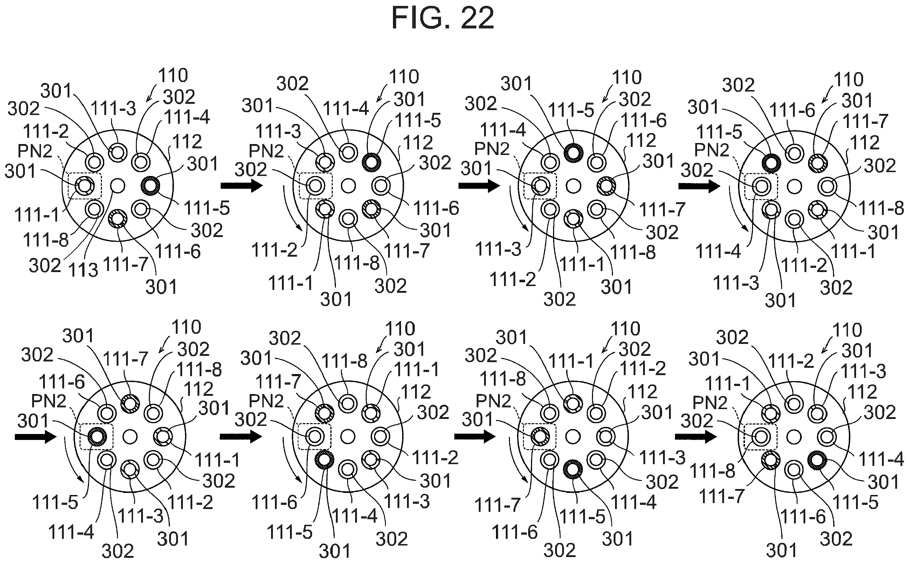

In the example illustrated in FIG. 22, the first containers 301 are held by the holders 111-1, 111-3, 111-5, and 111-7. The second containers 302 are held by the holders 111-2, 111-4, 111-6, and 111-8.

In the example illustrated in FIG. 22, the first and second containers 301 and 302 are set alternately so as to be adjacent to one another in the holders 111 arranged in the circumferential direction of the rotor 112. The control unit 200 (see FIG. 2) controls the centrifugation unit 110 and the dispensing unit 120 such that the first and second containers 301 and 302 are sequentially moved to the position of the nozzle 121 by rotating the rotor 112, and the supernatant in the first container 301 is removed and the nozzle 121 is cleaned.

As illustrated in FIG. 22, the control unit 200 (see FIG. 2) controls the centrifugation unit 110 and the dispensing unit 120 so as to move the holder 111-1 to the discharging position PN2 and aspirate and remove the supernatant in the first container 301 held by the holder 111-1. Thereafter, the control unit 200 performs control to rotate the rotor 112 so as to move the holder 111-2 holding a second container 302 to the discharging position PN2. The control unit 200 then cleans the nozzle 121 with the cleaning liquid contained in the second container 302 held by the holder 111-2.

The control unit 200 (see FIG. 2) repeatedly performs the same control to aspirate and remove the supernatant in the first container 301 held by each of the holders 111-3, 111-5, and 111-7, and to clean the nozzle 121 by using the second container 302 held by each of the holders 111-4, 111-6, and 111-8.

### <Reagent Dispensing, Supernatant Removal, and Nozzle Cleaning>

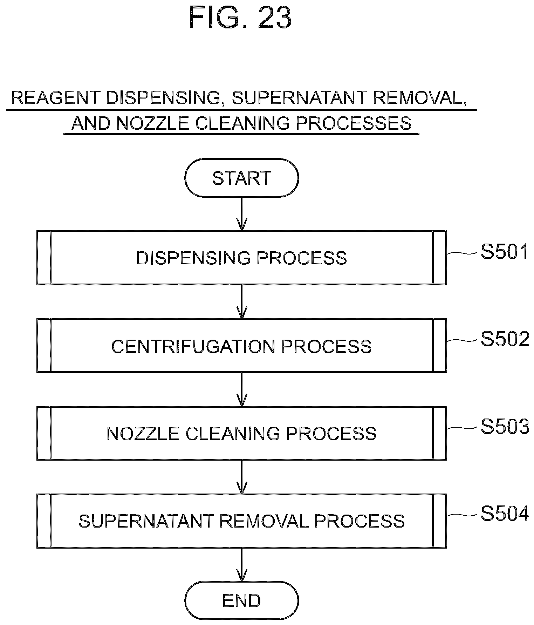

With reference to FIG. 23, a description is given of a series of procedures for a reagent dispensing process, a supernatant removal process, and a cleaning process for the nozzle 121 in a specimen preparation method by the specimen preparation device 100 according to this embodiment.

A reagent preparation method according to this embodiment includes step S501 of dispensing a reagent into the first containers 301 containing samples among the containers held by the holders 111 using the nozzle 121, step S502 of centrifuging the contents of the first containers 301, and step S503 of cleaning the nozzle 121 in a cleaning section included in the centrifugation unit 110. The step of cleaning the nozzle 121 is performed in the second container 302.

Step S501 of dispensing a reagent into the first container 301 is performed by rotating the rotor 112 to move the first container 301 to the position of the nozzle 121. Step S503 of cleaning the nozzle 121 includes a first cleaning operation of cleaning the nozzle 121 by rotating the rotor 112 after step S502 of dispensing the reagent into the first container 301 to move the second container 302 to the position of the nozzle 121. The step of performing the first cleaning operation is performed using a second container 302 held by one of the holders 111 after a reagent is dispensed into first containers 301 before the type of reagent to be dispensed into first containers 301 is changed.

The reagent preparation method according to this embodiment includes step S504 of aspirating and removing the supernatant contained in the first container 301 using the nozzle 121 after step S502 of centrifugation. Step S503 of cleaning the nozzle 121 includes a second cleaning operation of cleaning the nozzle 121 performed after step S504 of aspirating and removing the supernatant contained in the first container 301 using the nozzle 121 and before aspirating a reagent to be dispensed into the first container 301.

In the reagent preparation method according to this embodiment, step S504 of removing the supernatant in the first container 301 and step S503 of cleaning the nozzle 121 are alternately performed by rotating the rotor 112 to sequentially move, to the position of the nozzle 121, the first and second containers 301 and 302 alternately set so as to be adjacent to one another in the holders 111 arranged in the circumferential direction of the rotor 112.

### (First Reagent Setting Part)

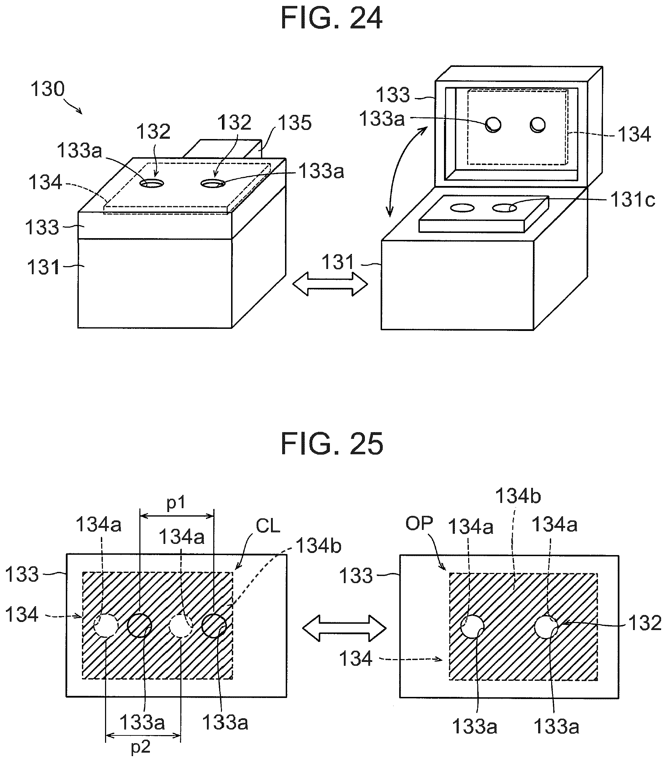

In an example illustrated in FIG. 24, the specimen preparation device 100 can use the dispensing unit 120 (see FIG. 3) to aspirate reagents through the insertion openings 132 from the first reagent containers 310 (see FIG. 3) set in the first reagent setting part 130. The first reagent setting part 130 is configured such that the insertion openings 132 can be opened and closed.

The first reagent setting part 130 includes the setting part main body 131, a lid part 133, a shutter member 134, and a shutter drive unit 135.

The setting part main body 131 is a box-shaped member with the lid part 133 that can be opened and closed and constitutes the top surface. The lid part 133 is provided so as to cover the setting part main body 131 from above. The lid part 133 has first insertion holes 133a, which the nozzle 121 passes through, formed above the reagent containers. The shutter member 134 is provided so as to overlap with the lid part 133. In the shutter member 134 (see FIG. 25), second insertion holes 134a for the nozzle 121 and a shielding part 134b are formed.

In FIG. 24, the shutter member 134 is provided on the lid part 133 so as to be opened and closed in an integrated fashion with the lid part 133 relative to the setting part main body 131. Thus, when the lid part 133 is opened to set or take out reagent containers, the shutter member 134 is also opened together with the lid part 133. Therefore, user convenience can be improved as compared with the case where the lid part 133 and the shutter member 134 are opened separately.

The shutter drive unit 135 includes an actuator to move the shutter member 134. As illustrated in FIG. 25, the shutter drive unit 135 is configured to move the shutter member 134 between an opening position OP where the first insertion holes 133a are opened through the second insertion holes 134a and a closing position CL where the first insertion holes 133a are closed by the shielding part 134b. In FIG. 25, the shielding part 134b is indicated by hatching.

### <Insertion Opening>

The insertion opening 132 in the first reagent setting part 130 includes the first insertion hole 133a in the lid part 133 and the second insertion hole 134a in the shutter member 134. At the opening position OP, the second insertion holes 134a overlaps with the first insertion holes 133a, so that the insertion openings 132 that connect the inside and outside of the first reagent setting part 130 are opened (that is, the first insertion holes 133a are opened). At the closing position CL, the shielding part 134b, instead of the second insertion holes 134a, overlaps with the first insertion holes 133a, so that the insertion openings 132 in the first reagent setting part 130 are closed (that is, the first insertion holes 133a are closed).

In an example of FIG. 25, the shutter member 134 is configured to be movable between one opening position OP where the first insertion holes 133a are opened through the second insertion holes 134a and the closing position CL. Thus, the shutter member 134 need only be moved between two positions. Therefore, the configurations of the shutter member 134 and the shutter drive unit 135 can be simplified as compared with the case where the shutter member 134 is moved between many positions.

The shutter member 134 has second insertion holes 134a as many as the first insertion holes 133a. At the opening position OP, the second insertion holes 134a overlap with the respective first insertion holes 133a, so that the first insertion holes 133a are opened. Thus, as compared with a configuration in which a plurality of first insertion holes 133a are opened all together by a long-hole-shaped second insertion hole 134a, for example, the second insertion holes 134a are arranged only at the positions where the first insertion holes 133a are formed, and thus, it is possible to effectively prevent gas flow and light transmission through the first insertion holes 133a.

In the example of FIG. 25, the lid part 133 has two first insertion holes 133a. The shutter member 134 has two second insertion holes 134a corresponding to the two first insertion holes 133a.

The pitch p1 of the first insertion holes 133a in the lid part 133 is equal to the pitch p2 of the second insertion holes 134a in the shutter member 134. Thus, it is possible to form a configuration in which all the first insertion holes 133a are opened at the opening position OP by only forming the first and second insertion holes 133a and 134a of the same size at the same pitch.

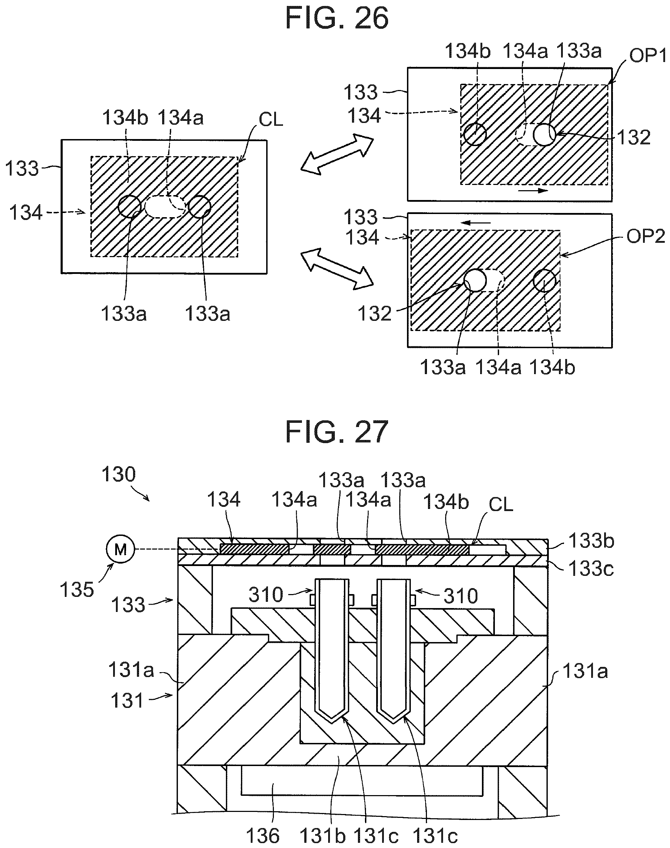

FIG. 26 illustrates an example in which a plurality of opening positions OP are provided. The shutter member 134 is configured to be able to open one of the first insertion holes 133a and the other independently through the second insertion hole 134a by being moved between the opening positions OP1 and OP2. Thus, it is possible to open one first insertion hole 133a necessary for aspirating a reagent and close the other first insertion hole 133a. Accordingly, it is possible to effectively prevent gas flow and light transmission through the first insertion holes 133a.

In FIG. 26, at the closing position CL, the second insertion hole 134a is positioned between the first insertion holes 133a. When the shutter member 134 is moved to the opening position OP1 on one first insertion hole 133a side, the one first insertion hole 133a and the second insertion hole 134a overlap with each other to open the first insertion hole 133a. In this case, the other first insertion hole 133a overlaps with the shielding part 134b and is closed. When the shutter member 134 is moved to the opening position OP2 on the other first insertion hole 133a side, the other first insertion hole 133a and the second insertion hole 134a overlap with each other to open the first insertion hole 133a. In this case, the one first insertion holes 133a overlaps with the shielding part 134b and is closed.

In the example of FIG. 26, the number of first insertion holes 133a and the number of second insertion holes 134a are different. The number of first insertion holes 133a may be any number. The number of second insertion holes 134a is any number, but may be the same as or less than the number of first insertion holes 133a.

### <Structure of Reagent Setting Part>

As illustrated in FIG. 27, the setting part main body 131 has an internal space surrounded by side parts 131a and a bottom part 131b. Container holders 131c are provided in the internal space. The upper part of the internal space is defined by the lid part 133. The container holder 131c is a recess into which a reagent container is inserted.

The reagent setting part is configured such that the inside of the reagent setting part is a closed space when the shutter member 134 is at the closing position CL. This structure effectively prevents evaporation of reagents inside the reagent setting part except during aspiration of reagents. The inside of the reagent setting part communicates with the outside only when the shutter member 134 is at the opening position OP.

The setting part main body 131 and at least one of the shutter member 134 and the lid part 133 are formed of light-shielding materials. Thus, the light-shielding property of the reagent setting part can be effectively improved.

In the example of FIG. 27, both the shutter member 134 and the lid part 133 are formed of light-shielding materials. The materials composing the shutter member 134 and the lid part 133 are opaque resin materials. Using a black resin material or painting the surfaces in black are preferable in terms of light shielding properties. The shutter member 134 and the lid part 133 can be formed of the same material. The shutter member 134 is provided so as to be in a surface contact with the lid part 133 and slide relative to the lid part 133. This structure improves the light-shielding properties between the lid part 133 and the shutter member 134. In this case, the shutter member 134 and the lid part 133 are preferably formed of materials having low friction coefficients and wear less. The shutter member 134 and the lid part 133 are made of resins such as polyacetal (POM), for example. The setting part main body 131 is formed of a metal material such as aluminum or an aluminum alloy.

The shutter member 134 is a single plate member with the second insertion holes 134a formed therein. Thus, the structure of the shutter member 134 can be simple. The second insertion holes 134a are through-holes formed in the plate member in the thickness direction. The shielding part 134b is a solid portion of the plate member in which no second insertion hole 134a is formed.

The lid part 133 includes an upper surface member 133b on the outer surface side and a lower surface member 133c on the setting part main body 131 side. The shutter member 134 is slidably provided between the upper surface member 133b and the lower surface member 133c. Since the shutter member 134 slides inside the lid part 133, it is possible to prevent users from touching the slide portion of the shutter member 134 and prevent foreign objects from entering slide portions and hindering the operation of the shutter member 134.

The upper surface member 133b is provided on the upper side (that is, the outer surface side) of the shutter member 134. The upper surface member 133b is in contact with the upper surface of the shutter member 134. The lower surface member 133c is provided on the lower side (that is, on the setting part main body 131 side) of the shutter member 134. The lower surface member 133c is in contact with the lower surface of the shutter member 134. An exterior plate or the like may be further provided on the upper side of the upper surface member 133b. The lower surface member 133c is exposed to the internal space of the reagent setting part in which the container holders 131c are provided. The first insertion holes 133a in the lid part 133 are holes that pass through the upper surface member 133b and the lower surface member 133c. In the example of FIG. 27, the first insertion hole 133a, in a strict sense, is composed of a through-hole in the upper surface member 133b and a through-hole in the lower surface member 133c that are formed at the same position.

The shutter drive unit 135 is configured to move the shutter member 134 between the opening position OP and the closing position CL by linearly moving the shutter member 134 in one direction. Thus, the configuration of the shutter drive unit 135 can be simple.

The configuration for the shutter drive unit 135 for moving the shutter member 134 is not limited to any specific ones because a known slide structure can be adopted. The shutter drive unit 135 includes an actuator such as an electric motor, a solenoid, or an air cylinder. The actuator is directly connected to the shutter member 134 or is connected to the shutter member 134 through a power transmission mechanism such as a cam mechanism, a crank mechanism, a rack and pinion mechanism, or a belt-pulley mechanism. The shutter member 134 is moved between the opening position OP and the closing position CL by drive force generated by the actuator.

The first reagent setting part 130 includes a reagent-temperature adjustment unit 136. Thus, the reagents in the reagent containers can be stored at an appropriate temperature while they are placed in the first reagent setting part 130. In this embodiment, since the shutter member 134 can prevent gas flows through the first insertion holes 133a, it is possible to effectively prevent changes in the temperature inside the reagent setting part.

In FIG. 27, the reagent-temperature adjustment unit 136 includes a Peltier element, for example, and is provided on the lower surface of the bottom part 131b of the setting part main body 131. The low temperature or high temperature generated by the reagent-temperature adjustment unit 136 is transmitted to the portions of the container holders 131c formed at the bottom part 131b through the material composing the bottom part 131b. The reagent-temperature adjustment unit 136 controls the temperature of the reagents in the first reagent containers 310 held by the container holders 131c mainly through heat conduction. In this configuration, it is preferable that the bottom part 131b of the setting part main body 131 be made of a material having high thermal conductivity such as aluminum or an aluminum alloy. The setting part main body 131 may be provided with an exterior made of a heat insulating material.

With such a configuration, the first reagent setting part 130 can store the first reagent containers 310 set in it in a sealed and light-shielded state while keeping the first reagent containers 310 at the storage temperature. During aspiration of a reagent by the dispensing unit 120, a first reagent in a first reagent container 310 can be aspirated through an insertion opening 132 temporarily opened.

The dispensing unit 120 (see FIG. 3), at a position above the first insertion hole 133a, aspirates a reagent by inserting the nozzle 121 into a reagent container through a first insertion hole 133a and a second insertion hole 134a at in the opening position OP, and then, at a position above the holder 111 of the centrifugation unit 110, discharges the aspirated reagent from the nozzle 121 into the reaction container 300. Thus, the centrifugation unit 110 can discharge reagents into the reaction containers 300, react samples with the reagents, and perform centrifugation. Therefore, the device configuration can be simpler than the configuration in which the reaction container 300 is moved between a reagent dispensing position, a reaction processing position, and the centrifugation unit 110. Since the dispensing unit 120 need only be moved between the aspirating position PN1 above the first insertion hole 133a and the discharging position PN2 above the holder 111, the device configuration can also be simple.

### (Modified Example)

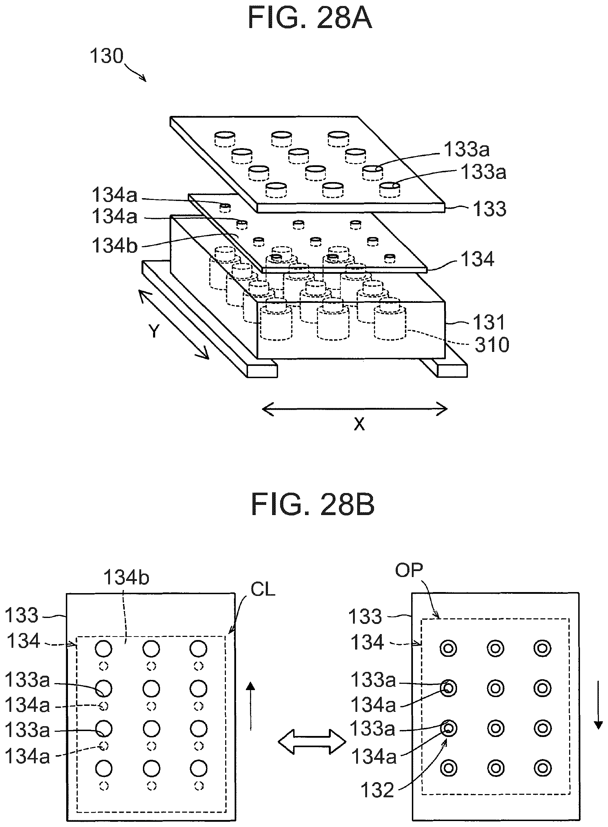

FIGs. 28A and 28B illustrate an example in which the setting part main body 131 is configured to receive the reagent containers in a matrix along the directions of two axes orthogonal to each other in a horizontal plane. The shutter member 134 can be moved between an opening position OP for opening twelve first insertion holes 133a and the closing position CL. In the case where the dispensing unit 120 moves along one movement axis 128a, the first reagent setting part 130 may be provided with a mechanism that moves the first reagent setting part 130 in a Y direction orthogonal to the movement axis 128a extending in an X direction in the horizontal plane.

### <Fluid Circuit>

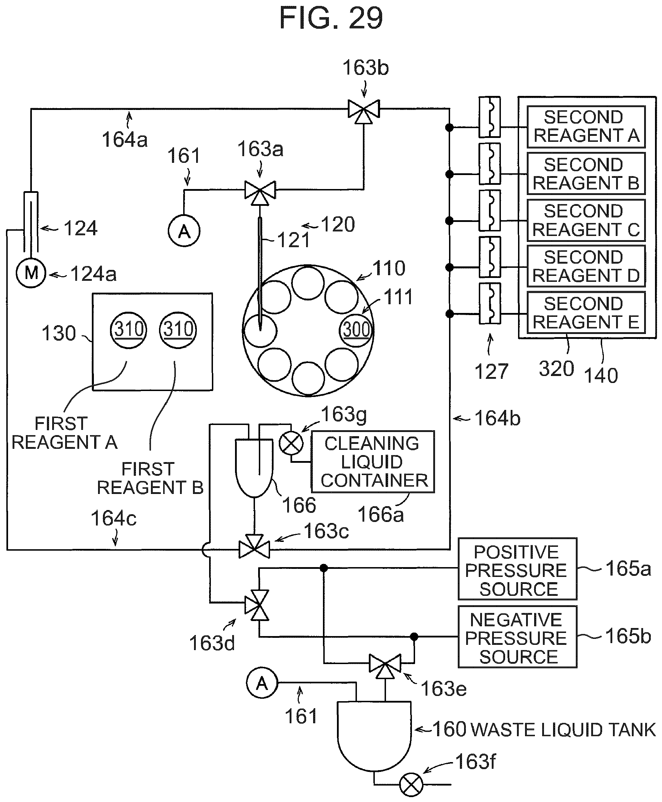

With reference to FIG. 29, a description is given of a fluid circuit for aspirating and discharging reagents and aspirating supernatants with the dispensing unit 120.

The specimen preparation device 100 includes a first pump 124 and second pumps 127. The first pump 124 is a syringe pump, and the second pump 127 is a diaphragm pump. The number of first pumps 124 is one. The second pumps 127 are provided, one for each of the second reagent containers 320 set in the second reagent setting part 140.

The nozzle 121 of the dispensing unit 120 is connected to the first and second pumps 124 and 127 through branching units 163a and 163b which are three-way valves. The branching unit 163a has three ports connected to the nozzle 121, the branching unit 163b, and the waste liquid tank 160. The branching unit 163b has three ports connected to the branching unit 163a, a flow path 164a leading to the first pump 124, and a flow path 164b leading to the second pump 127. The flow path 164b is connected to the second pumps 127 provided in parallel and also connected to a cleaning liquid tank 166 through a branching unit 163c. The branching unit 163c is connected to the first pump 124 through a flow path 164c.

The specimen preparation device 100 includes or is externally connected to a positive pressure source 165a and a negative pressure source 165b. The positive pressure source 165a and the negative pressure source 165b are connected to the cleaning liquid tank 166 through a branching unit 163d and to the waste liquid tank 160 through a branching unit 163e. The first pump 124, which is a syringe pump, performs aspiration and discharging using a motor 124a for driving a syringe. The second pumps 127, which are diaphragm pumps, perform an aspiration operation using the negative pressure from the negative pressure source 165b and perform a discharging operation using the positive pressure from the positive pressure source 165a. Here, illustration of the configurations of flow paths and valves involved in the aspiration and discharging operations is omitted. The opening and closing of valves such as the branching units as well as the operations of the first and second pumps 124 and 127 are controlled by the control unit 200.

To dispense a first reagent, the first pump 124 is connected to the nozzle 121 by switching the branching units 163a and 163b. By the aspiration operation of the first pump 124, the first reagent is aspirated from the tip of the nozzle 121 that has accessed the inside of the first reagent container 310. The first reagent aspirated into the nozzle 121 is discharged by the discharging operation of the first pump 124. The dispensing amount of the first reagent is controlled by controlling the drive amount of the motor 124a.

To dispense a second reagent, the second pump 127 is connected to the nozzle 121 by switching the branching units 163a and 163b. The branching unit 163c is closed. By the aspiration operation of the second pump 127, the second reagent is aspirated from a second reagent container 320 into the second pump 127. By the discharging operation of the second pump 127, the second reagent aspirated into the second pump 127 is sent to the nozzle 121 and discharged from the nozzle 121. The dispensing amount of the second reagent is controlled by the one-time discharge capacity of the second pump 127 and the number of discharging operations by the second pump 127. The discharging amount of the second pump 127 is set to the total amount of the dispensing amount from the nozzle 121 and the capacity of the distribution path from the second pump 127 to the tip of the nozzle 121.

To aspirate a supernatant, the negative pressure source 165b is connected to the nozzle 121 through the waste liquid tank 160 by switching the branching units 163a and 163e. The branching unit 163d and an on-off valve 163f of the waste liquid tank 160 are closed. The supernatant in a reaction container 300 is aspirated from the tip of the nozzle 121 and discharged into the waste liquid tank 160 by the negative pressure of the negative pressure source 165b.

To discharge cleaning liquid, the positive pressure source 165a is connected to the nozzle 121 through the cleaning liquid tank 166 by switching the branching units 163a to 163d. An on-off valve 163g between the branching unit 163e and the cleaning liquid container 166a is closed. The cleaning liquid in the cleaning liquid tank 166 is discharged from the tip of the nozzle 121 by the positive pressure of the positive pressure source 165a.

The specimen preparation device 100 can perform a cleaning operation for the nozzle 121 by using a container held by a holder 111. To clean the nozzle 121, cleaning liquid in the cleaning liquid tank 166 is discharged from the tip of the nozzle 121 by a cleaning liquid discharging operation. By the same aspiration operation as the aspiration of the supernatant, the supernatant in the container is aspirated from the tip of the nozzle 121 and discharged into the waste liquid tank 160.

### (Control Unit)

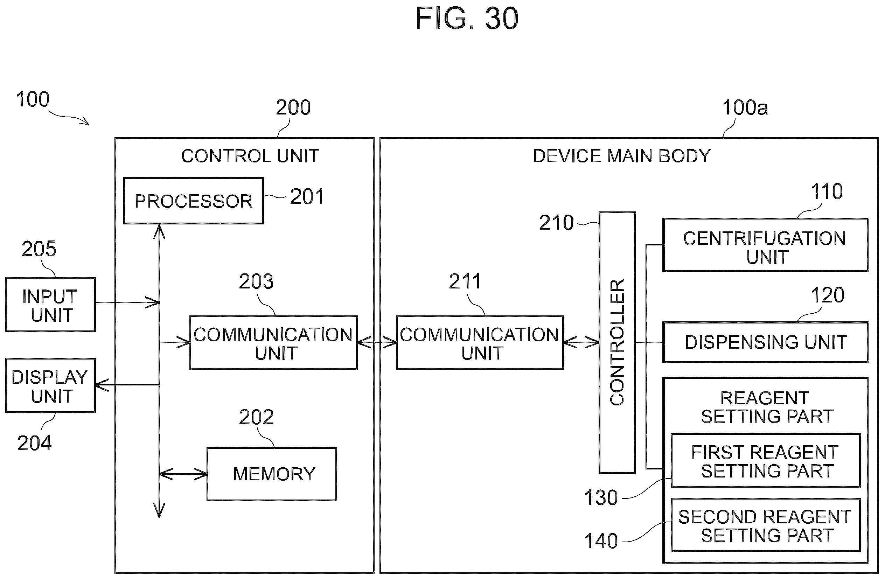

As illustrated in FIG. 30, the control unit 200 is a computer including a processor 201 and a memory 202. The control unit 200 includes a communication unit 203, a display unit 204, and an input unit 205. FIG. 30 illustrates an example in which a device main body 100a of the specimen preparation device 100 and the control unit 200 are separated and communicably connected. The device main body 100a includes a controller 210 that outputs control signals to the centrifugation unit 110, the dispensing unit 120, the reagent setting part, and the like, and a communication unit 211. The control unit 200 may be incorporated in the device main body 100a.

The processor 201 is, for example, a central processing unit (CPU) or a field-programmable gate array (FPGA). The memory 202 may include a memory and a storage. The storage can be, for example, a hard disk drive (HDD) or a solid state drive (SSD). The computer operates as the control unit 200 of the specimen preparation device 100 by the processor 201 executing programs stored in the memory 202.

The control unit 200 controls a rotational operation of the centrifugation unit 110. For example, the rotation control by the control unit 200 may include the rotation control during centrifugation, the rotation control during agitation, the movement control of the holders 111 for dispensing, and the control for a balance check operation of the rotor 112. In the configuration in which the centrifugation unit 110 includes the temperature adjustment unit 117, the control unit 200 performs temperature control of the centrifugation unit 110.

The control unit 200 controls the operation of the dispensing unit 120. For example, the control unit 200 controls the horizontal movement of the nozzle 121 and the vertical movement of the nozzle 121. The control unit 200 controls the aspiration and discharging operations of the pumps. The control unit 200 controls switching or opening and closing of the branching units and the valves.

The control unit 200 controls the operation of the reagent setting part. For example, the control unit 200 controls the temperature of the first reagent setting part 130. In the configuration in which the first reagent setting part 130 includes a shutter member 134, the control unit 200 controls opening and closing of the shutter member 134.

The communication unit 203 is connected to the communication unit 211 of the device main body 100a so as to be communicable with each other. The communication unit 203 and the communication unit 211 include communication interfaces to perform wired or wireless information communication. The controller 210 outputs control signals to each unit of the device main body 100a according to the control commands from the control unit 200, and transmits detection signals from various sensors to the control unit 200.

The display unit 204 and the input unit 205 may be located externally and connected to the control unit 200, or may be of built-in types integrated in the control unit 200. The display unit 204 is a display device such as a liquid crystal display or an EL display. The input unit 205 is an input device such as a keyboard, a mouse, and a touch panel. As an example, the control unit 200 includes a touch panel display in which the display unit 204 and the input unit 205 are integrated.

### (Display Screen)

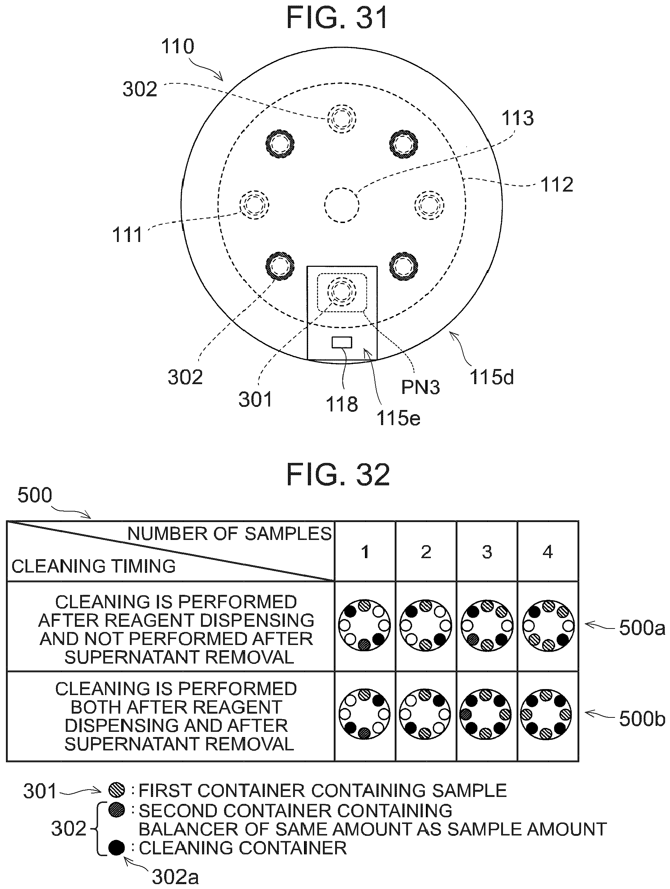

With reference to FIGs. 31 to 33, a description is given of a configuration with which the control unit 200 (see FIG. 30) displays, on the display unit 204, the holders 111 to which the containers are to be set among the plurality of holders 111.

The control unit 200 (see FIG. 30) controls the display unit 204 to display the containers or samples to be placed in at least one of the holders 111 such that those can be identified. To be more specific, the control unit 200 controls the display unit 204 to identifiably display the holders 111 to which the first containers 301 containing samples are to be set and the holders 111 to which the second containers 302 containing no sample to be set, among the plurality of holders 111.

Even in the case where the holders 111 to which the first containers 301 and the second containers 302 are to be set are identifiably displayed, there is a possibility that the user may mistake a holder 111 displayed on the display unit 204 for a holder 111 to which the container is actually to be set when he/she selects the holders 111 to which the containers to be set among the plurality of holders 111. As a result, containers may not be set to the holder 111 to which the containers were to be set. Therefore, in this embodiment, the centrifugation unit 110 is configured such that the containers can be set one by one to the holders 111, in order to prevent the user from mistaking the positions to which containers to be set.

To be more specific, as illustrated in FIG. 31, the lid part 115d is provided above the centrifugation unit 110 and has an opening 115e at a position directly above a predetermined position PN3. Thus, the user can set the container to the holder 111 through the opening 115e of the lid part 115d. In addition, the centrifugation unit 110 is provided with a container detector 118. The control unit 200 (see FIG. 30) controls the container detector 118 to detect whether or not a container is set to the holder 111 positioned at the predetermined position PN3. The container detector 118 includes an optical sensor and the like, for example.

The control unit 200 (see FIG. 30) controls the rotor drive unit 114 (see FIG. 9) and the rotation position detector 114a (see FIG. 9) such that when the user sets containers, the holders 111 to which containers are to be set are sequentially moved to the predetermined position PN3.

As described above, the control unit 200 (see FIG. 30) is configured to perform control for displaying, on the display unit 204, the holders 111 to which containers are to be set and control for moving the holders 111 to the predetermined position PN3.

### <Container Arrangement Pattem>

The control unit 200 (see FIG. 30) obtains the number of first containers 301 from an input operation of information on samples through the input unit 205 (see FIG. 30) and controls the display unit 204 (see FIG. 30) to display the holders 111 to which first containers 301 are to be set, based on the obtained number of first containers 301. The control unit 200 obtains a pattern according to the timing of cleaning and the number of samples among arrangement patterns 500 stored in the memory 202. To display the obtained pattern, the control unit 200 controls the display unit 204 to display the holders 111 to which containers are to be set.

In an example of FIG. 32, the memory 202 stores the arrangement patterns 500 for the first containers 301 and the second containers 302. The arrangement patterns 500 includes a first arrangement pattern 500a and a second arrangement pattern 500b. The first arrangement pattern 500a is one for cleaning the nozzle 121 after dispensing a reagent, without performing cleaning after removal of supernatant. The second arrangement pattern 500b is one for performing cleaning both after dispensing a reagent and after removing supernatant.

In the first arrangement pattern 500a, a pair of cleaning containers 302a are set regardless of the number of samples. In the second arrangement pattern 500b, cleaning containers 302a the number of which corresponds to the number of samples are set because the nozzle 121 is cleaned every time supernatant is removed from a first container 301.

When the number of first containers 301 is an even number, the control unit 200 (see FIG. 30) controls the display unit 204 to display pairs of holders 111 that are symmetrical with respect to the rotation axis of the rotor 112 among the plurality of holders 111 as the holders 111 to which first containers 301 are to be set.

When the number of samples is an odd number, one of the first containers 301 is not paired. Therefore, in order to balance the weight with the first container 301, a second container 302 is set as a balancer at a position to be paired with the first container 301.

Therefore, when the number of first containers 301 is an odd number, the control unit 200 (see FIG. 30) controls the display unit 204 (see FIG. 30) to display, among the plurality of holders 111, the holder 111 at a position symmetrical to the holder 111 to which a first container 301 is to be set with respect to the rotation axis of the rotor 112 as the holder 111 to which a balancer is to be set, together with the holders 111 to which first containers 301 are to be set. The control unit 200 also controls the dispensing unit 120 to dispense the cleaning liquid as a balancer into the second container 302. To be more specific, the control unit 200 controls the dispensing unit 120 (see FIG. 19) to dispense cleaning liquid as much as the contents of the first container 301 into the second container 302.

In the arrangement patterns 500 according to the example of FIG. 32, cleaning containers 302a are set such that the number of cleaning containers 302a to be set is an even number regardless of the number of samples. In the arrangement patterns 500, cleaning containers 302a are set to pairs of holders 111 located at symmetrical positions with respect to the rotation axis of the rotor 112 among the plurality of holders 111.

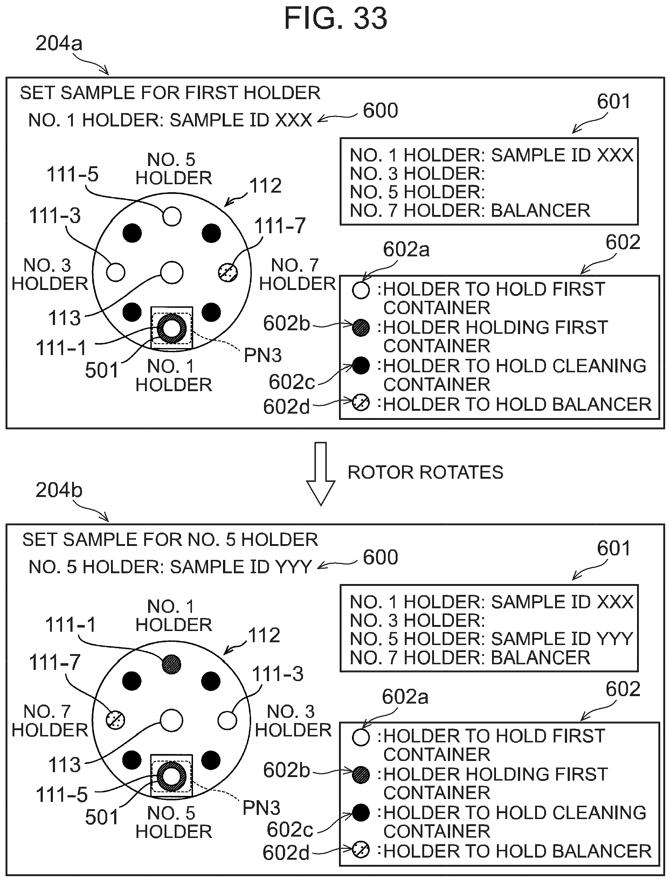

FIG. 33 illustrates an example of display screens 204a and 204b displayed on the display unit 204 by the control unit 200 (see FIG. 30), which are based on the arrangement patterns 500 of FIG. 32. The display screen 204a is a screen example at the time when a first container 301 is set to the first holder 111-1. The display screen 204b is a screen example at the time when a first container 301 is set to the fifth holder 111-5. In the example of FIG. 33, the number of samples is 3, and one balancer is set. In FIG. 33, for convenience, the first holder 111-1, the third holder 111-3, the fifth holder 111-5, and the seventh holder 111-7 are illustrated as No. 1 holder, No. 3 holder, No. 5 holder, and No. 7 holder, respectively.

In the display screen 204a of FIG. 33, the control unit 200 (see FIG. 30) controls the display unit 204 to display the holders 111 to which a first container 301 is to be set, the holders 111 to which a cleaning container 302a is to be set, and the holders 111 to which a balancer is to be set such that those holders are identifiable by changing the display color. In FIG. 33, the holders 111 are hatched differently to represent different display colors.

The control unit 200 (see FIG. 30) obtains information 600 on the sample contained in the first container 301 based on input operation. The sample information 600 includes a sample ID, for example. As illustrated in the display screen 204a, the control unit 200 controls the display unit 204 to display the obtained sample information 600. In the example illustrated in FIG. 33, the control unit 200 controls the display unit 204 to highlight the holder 111 moved to the predetermined position PN3. To be more specific, the control unit 200 performs control to highlight the holder 111 moved to the predetermined position PN3 by displaying a marker 501 around the holder 111 when the holder 111 to which a sample is to be set is moved to the predetermined position PN3, based on the sample information 600 inputted by the user.

On the display screen 204a, because the user has inputted the information 600 on the sample to be set in the first holder 111-1, the control unit 200 (see FIG. 30) controls the rotor 112 to move the first holder 111-1 to the predetermined position PN3. In this event, the control unit 200 controls the display unit 204 to display the marker 501 around the first holder 111-1.

The control unit 200 (see FIG. 30) performs control such that the display unit 204 displays information 601 on the first container 301 set to the holder 111. To be more specific, the control unit 200 controls the display unit 204 to display the sample ID of the sample set by the user together with the corresponding holder 111 on the display screen 204a as the information 601 on the first container 301 set to the holder 111 after the first container 301 is set to the first holder 111-1.

In the example illustrated in FIG. 33, the control unit 200 (see FIG. 30) controls the display unit 204 to display legends 602 on the display screens 204a and 204b, which enable discrimination of a holder 111 to which a first container 301 is to be set, a holder 111 to which the first container 301 has been set, a holder 111 to which a cleaning container 302a is to be set, and a holder 111 to which a balancer (second container 302) is to be set.

The control unit 200 (see FIG. 30) performs control such that a holder 111 to which a first container 301 is to be set, a holder 111 to which a first container 301 has been set, a holder 111 to which a cleaning container 302a is to be set, and a holder 111 to which a balancer is to be set, among the plurality of holders 111, are displayed in the display methods indicated by the legends 602a, 602b, 602c, and 602d, respectively.

After a first container 301 is set in the first holder 111-1, the control unit 200 (see FIG. 30) controls the rotor 112 to move the fifth holder 111-5 positioned symmetrical to the first holder 111-1 to the predetermined position PN3. In this case, the control unit 200 performs control such that the rotor 112 is rotated by 180 degrees.

The control unit 200 (see FIG. 30) controls the display unit 204 to display the holder 111 that has been moved to the predetermined position PN3 by rotating the rotor 112 and to which a container has been set. In the example illustrated in FIG. 33, the control unit 200 performs control such that the rotor 112 is rotated by 90 degrees and then performs control such that the display unit 204 displays the display screen 204b at the time when a first container 301 is set to the fifth holder 111.

The control unit 200 (see FIG. 30) controls the display unit 204 to display, in the display screen 204b, the first holder 111-1 to which a first container 301 has been set in the display method changed from the legend 602a for a holder 111 to which a first container 301 is to be set to the legend 602b for a holder 111 to which a first container 301 has been set.

On the display screen 204b, the fifth holder 111-5 is moved to the predetermined position PN3, and the marker 501 is displayed around the fifth holder 111-5. On the display screen 204b, information 600 on a new sample is displayed as a sample to be set to the fifth holder 111-5 by the user.

After the user sets a first container 301 to the fifth holder 111-5, the control unit 200 controls the display unit 204 to display the information 601 on the first container 301 set to the holder 111 on the display screen 204b.

Thereafter, the control unit 200 performs, in the same way as for the fifth holder 111-5, control to move the third holder 111-3 to the predetermined position PN3 and control to display the sample information 600 based on input operation. After a first container 301 is set to the third holder 111-3, the control unit 200 moves the seventh holder 111-7 to the predetermined position PN3. Since a balancer is set to the seventh holder 111-7, the control unit 200 controls the display unit 204 to display a message indicating that a balancer is displayed at the position where the sample information 600 is displayed. Since FIG. 33 illustrates an example of setting one balancer, the information 601 on the first containers 301 set to the holders 111 indicates, at the position of the seventh holder 111-7, that a balancer is to be set.

### (Control Operation)

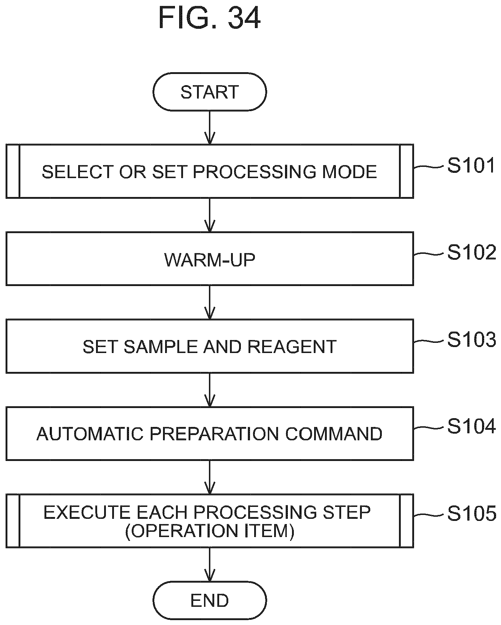

With reference to FIG. 34, operation control of the specimen preparation device 100 is described.

In step S101, the control unit 200 receives the selection or setting of a processing mode of the specimen preparation device 100. The control unit 200 obtains processing items to be performed during specimen preparation through the input unit 205. Assays are performed according to the processing items. The control unit 200 obtains information such as the number of samples and a cleaning mode through the input unit 205. The processing mode may be selected from preset options, or may be set by the user inputting information in entry fields.

In step S102, the control unit 200 executes a warm-up process. The control unit 200 performs control for adjusting the temperatures of portions concerning to temperature control. The control unit 200 uses the reagent-temperature adjustment unit 136 in the first reagent setting part 130 to adjust the temperature of the first reagent setting part 130 to a predetermined temperature. The control unit 200 uses the temperature adjustment unit 117 in the centrifugation unit 110 to adjust the temperature of the heat transfer surface 117a to a predetermined temperature.

In step S103, samples are set. Reaction containers 300 containing the samples are set one by one to the holders 111 of the centrifugation unit 110. The control unit 200 determines the arrangement of the containers to be set in the holders 111 of the centrifugation unit 110 based on the setting information obtained in step S101. The control unit 200 rotates the rotor 112 such that a holder 111 to which a container is to be set is positioned at a predetermined setting position. The control unit 200 makes the display unit 204 display the container to be set to the holder 111 positioned at the setting position. The user sets the container to the holder 111, checking the display on the display unit 204. The control unit 200 sequentially positions the holders 111 one by one at the setting position, thereby letting the user set containers to be processed to the respective holders 111.

In step S104, the control unit 200 receives an input of a specimen preparation start command through the input unit 205. When the user performs an input operation, automatic specimen preparation is started.

In step S105, the control unit 200 performs control to execute the operation items for executing the processing steps for specimen preparation in the order corresponding to the processing mode in step S101.

The operation items may include, for example, the following items.

Movement of the containers in the holders 111 to the discharging position and a dispensing process by the dispensing unit 120
An agitation process by the centrifugation unit 110
A reaction process between samples and reagents
A removal process of removing supernatant in the reaction container 300
A cleaning process of cleaning the nozzle 121
A temperature control process of controlling the temperature of the first reagent setting part 130

When a series of processing steps is completed, the specimen preparation processing operation is completed.

### (Display Processing during Setting of Reaction Containers)

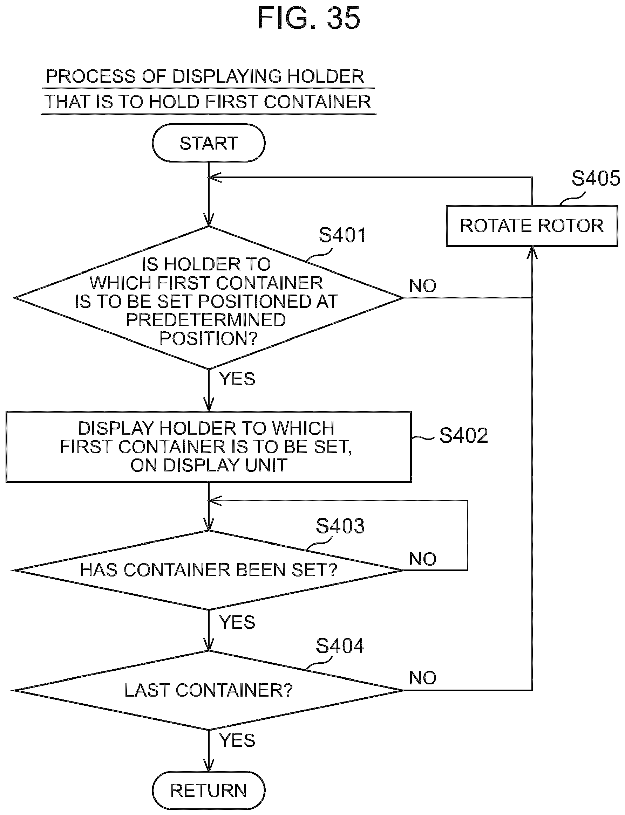

With reference to FIG. 35, a description is given of processing performed by the control unit 200 to display an arrangement pattern 500 on the display unit 204 when reaction containers 300 are set.

In step S401, the control unit determines whether or not the holder 111 to which a sample is to be set is positioned at the predetermined position PN3. If the holder 111 to which a first container 301 is to be set is positioned at the predetermined position PN3, the processing proceeds to step S402. In step S402, the control unit 200 makes the display unit 204 display the holder 111 to which a first container 301 is to be set.

In step S403, the control unit 200 determines whether or not a container has been set. To be more specific, the control unit 200 determines whether or not a container has been set, based on the output results from the container detector 118. If a container has been set, the processing proceeds to step S404.

In step S404, the control unit 200 determines whether or not the set container is the last container. If the container is not the last container, the processing proceeds to step S405. In step S405, the control unit 200 rotates the rotor 112 and returns the processing to step S401. By repeating steps S401 to S405, first containers 301 are set to the holders 111 to which the first containers 301 were to be set.

If the control unit 200 determines in step S401 that the holder 111 to which a first container 301 is to be set is not positioned at the predetermined position PN3, the processing proceeds to step S405.

If the control unit 200 determines in step S403 that a first container 301 has not been set, step S403 is repeated until a first container 301 is set.

If the control unit 200 determines in step S404 that the last container has been set, the display processing to display the holders 111 to which a first container 301 is to be set is completed.

### <Dispensing Process>

In the dispensing process, the control unit 200 controls the centrifugation unit 110 and the dispensing unit 120 to perform the following (a) to (e).
(a) Aspirate a first amount of a reagent through the nozzle 121 at the reagent aspirating position PN1.
(b) Move the nozzle 121 from the aspirating position PN1 to the discharging position PN2.
(c) Discharge a second amount of the reagent smaller than the first amount through the nozzle 121 into the reaction container 300 at the discharging position PN2.
(d) Move another reaction container 300 to the discharging position PN2 by rotationally moving the holders 111.
(e) Repeat (c) and (d) until the reagent is discharged into the reaction containers 300 to which the reagent was to be dispensed.

Thus, several dispensing operations for the reaction containers 300 to which the reagent is to be dispensed can be performed continuously by aspirating only once in advance the first amount of reagent corresponding to the total dispensing amount for the reaction containers 300. Therefore, the specimen preparation can be efficiently performed as compared with the case where the aspiration operation is performed for every dispensing operation. Since it is not necessary to provide nozzles 121 as many as the number of reaction containers 300 to be dispensed, the dispensing unit 120 can be downsized.

The first amount is the amount of reagent to be aspirated. The second amount is the amount of reagent discharged into one reaction container 300. The first amount is equal to or greater than the product of the number of the reaction containers 300 to which the reagent is to be dispensed and the second amount. Thus, the second amount of reagent can be dispensed in one reagent aspiration operation to all of the reaction containers 300 to which the reagent is to be dispensed.

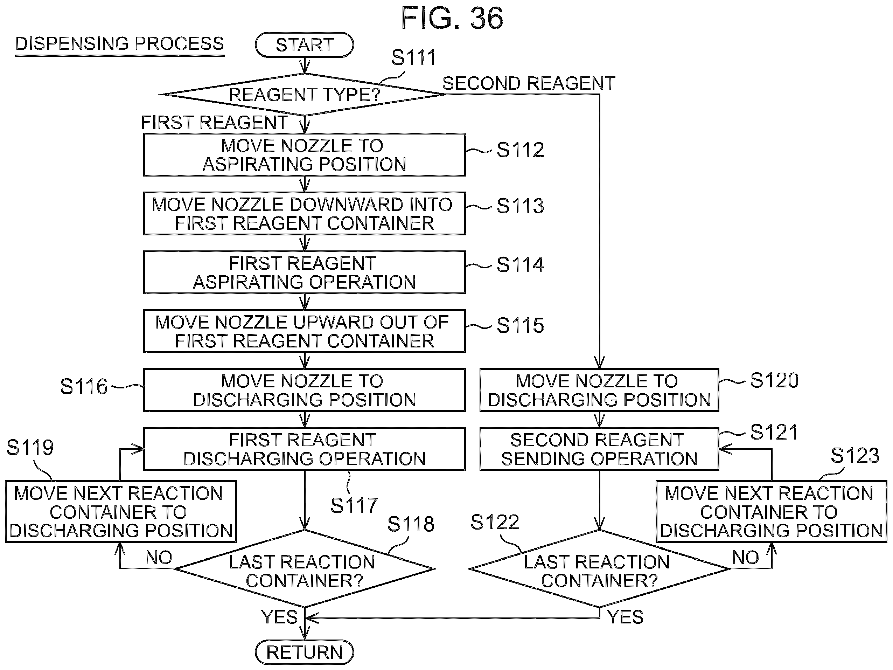

FIG. 36 illustrates an example of a control process of the operation items of the dispensing process.

In step S111, the control unit 200 determines whether the type of the reagent to be dispensed is the first reagent or the second reagent. In the case of the first reagent, the processing proceeds to step S112. In the case of the second reagent, the processing proceeds to step S120.

In step S112, the control unit 200 horizontally moves the nozzle 121 to the aspirating position PN1 directly above the first reagent container 310. In step S113, the control unit 200 moves the nozzle 121 downward toward the inside of the first reagent container 310. The control unit 200 moves the shutter member 134 from the closing position CL to the opening position OP. In step S114, the control unit 200 makes the first pump 124 execute an aspiration operation. Thus, the first amount of the first reagent is aspirated into the nozzle 121. In step S115, the control unit 200 moves the nozzle 121 upward toward above the first reagent container 310. In this event, the control unit 200 moves the shutter member 134 from the opening position OP to the closing position CL.

In step S116, the control unit 200 horizontally moves the nozzle 121 to the discharging position PN2. The control unit 200 rotates the holder 111 holding the reaction container 300 to which the reagent is to be discharged to immediately below the discharging position PN2. In step S117, the control unit 200 makes the first pump 124 execute a discharging operation. Thus, the second amount of the first reagent is discharged into the reaction container 300.

In step S118, the control unit 200 determines whether or not the reaction container 300 to which the reagent has just been dispensed is the last reaction container 300 to which the reagent is to be dispensed. If the reaction container is not the last reaction container 300, the processing proceeds to step S119. In step S119, the control unit 200 rotates the holder 111 holding the reaction container 300 to which the reagent is to be dispensed next, to immediately below the discharging position PN2, and returns the processing to step S117. By repeating steps S117 to S119, the first reagent is dispensed into each of the reaction containers 300 to which the reagent was to be dispensed.

When it is determined in step S111 that the second reagent is to be dispensed, the control unit 200 horizontally moves the nozzle 121 to the discharging position PN2 in step S120. The control unit 200 rotates the holder 111 holding the reaction container 300 to which the reagent is to be discharged, to immediately below the discharging position PN2. In step S121, the control unit 200 makes the second pump 127 perform an operation of sending the second reagent to the nozzle 121. Thus, the second reagent is discharged into the reaction container 300.

Steps S122 and S123 are the same processes as in steps S118 and S119 described above. By repeating steps S121 to S123, the second reagent is dispensed into each of the reaction containers 300 to which the second reagent was to be dispensed.

If the control unit 200 determines in step S119 or step S122 that the reaction container 300 to which the reagent has just been dispensed is the last reaction container 300 to which the reagent was to be dispensed, the dispensing process ends.

### <Opening and Closing Control of Shutter Member>

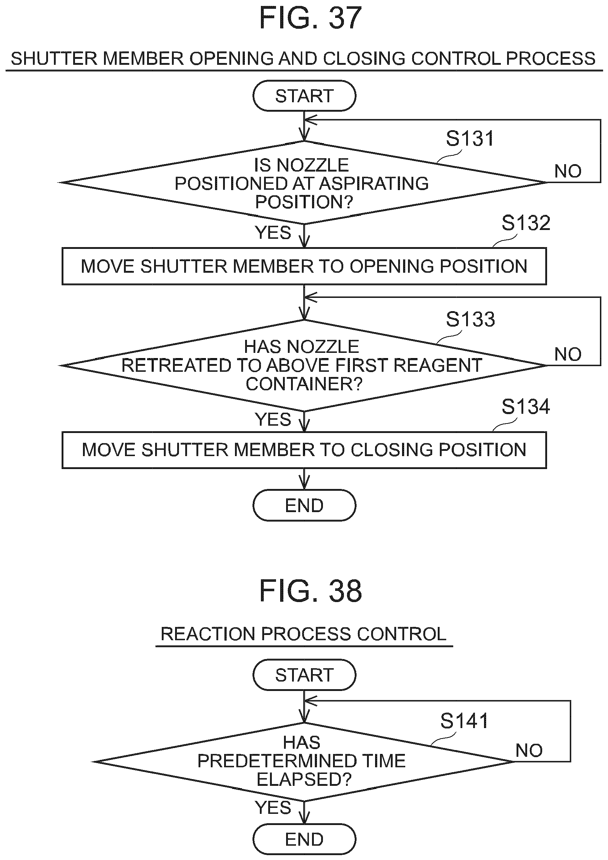

With reference to FIG. 37, a description is given of opening and closing control of the shutter member 134 in the dispensing process. The opening and closing control of the shutter member 134 is performed during the processes of steps S112 to S115 in FIG. 36.

In step S131, the control unit 200 determines whether or not the nozzle 121 has been positioned at the aspirating position PN1 directly above a first reagent container 310 (step S112). The control unit 200 waits with the shutter member 134 in the closing position CL until the nozzle 121 is positioned at the aspirating position PN1.

When the nozzle 121 is positioned at the aspirating position PN1, the control unit 200 in step S132 controls the shutter drive unit 135 so as to move the shutter member 134 from the closing position CL to the opening position OP. This allows the nozzle 121 to access the inside of the first reagent container 310. In this state, steps S113 to S115 are executed.

In step S133, the control unit 200 determines whether or not the nozzle 121 has retreated to above the first reagent container 310 (step S115). The control unit 200 waits with the shutter member 134 in the opening position OP until the nozzle 121 is positioned higher than the insertion opening 132.

When the nozzle 121 retreats to a position higher than the insertion opening 132, the control unit 200 in step S134 controls the shutter drive unit 135 to move the shutter member 134 from the opening position OP to the closing position CL. Thus, the internal space of the first reagent setting part 130 is closed.

### (Centrifugation and Reaction Process)

The control unit 200 is configured to control the following (f) and (g).
(f) React samples and reagents in reaction containers 300 for a predetermined time.
(g) Centrifuge the contents of the reaction containers 300 by rotating the holders 111.

Thus, the samples and the reagents can be reacted inside the centrifugation unit 110, and the centrifugation can be performed directly after the reaction. Therefore, unlike the case where the reaction containers 300 after reagents were dispensed are moved for reaction to a reaction section different from the centrifugation unit 110, the centrifugation unit 110 can also serve as a reaction section. Accordingly, the device can be downsized.

### <Reaction Process>

With reference to FIG. 38, a description is given of control in the reaction process in the centrifugation unit 110. In step S141, the control unit 200 determines whether or not a predetermined time has elapsed, with the rotation of the rotor 112 stopped. The control unit 200 continues the state in which the rotation of the rotor 112 is stopped until the predetermined time elapses. When the predetermined time has elapsed, the reaction process ends.

### <Centrifugation>

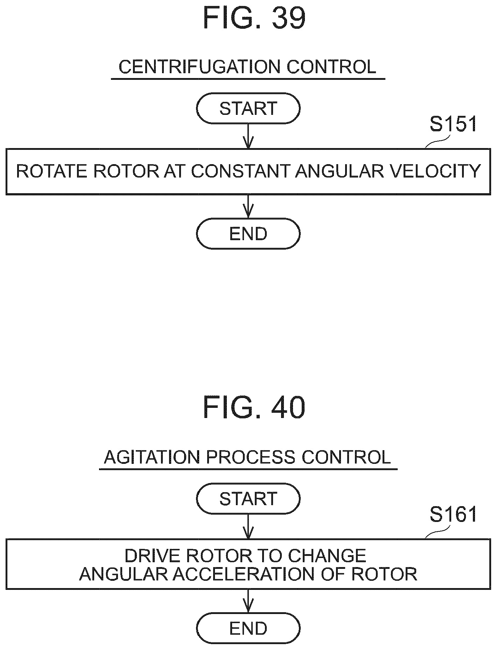

With reference to FIG. 39, a description is given of control in the centrifugation by the centrifugation unit 110. In step S151, the control unit 200 controls the centrifugation unit 110 such that the contents of the reaction container 300 are settled by rotating the rotor 112 at a predetermined angular velocity. The control unit 200 controls the centrifugation unit 110 such that the rotor 112 rotates at the predetermined constant angular velocity for the predetermined time. This makes the contents of the reaction container 300 settled.

### <Agitation Process>

With reference to FIG. 40, a description is given of control in the agitation process by the centrifugation unit 110. In step S161, the control unit 200 controls the centrifugation unit 110 so as to agitate the contents of the reaction containers 300 by changing the angular acceleration of the rotor 112. The control unit 200 controls the centrifugation unit 110 such that a change in angular acceleration is repeated a predetermined number of times. With this control, the contents of the reaction container 300 are agitated.

### <Supernatant Removal Process>

The control unit 200 is configured to perform the following control (h) to (j).
(h) Aspirate the supernatant in a reaction container 300 subjected to centrifugation at the discharging position PN2 using the nozzle 121.
(i) Move another reaction container 300 to the discharging position PN2 by rotationally moving the holders 111.
(j) Repeat (h) and (i) until supernatant is aspirated from the reaction containers 300 to be subjected to aspiration.

Thus, the dispensing unit 120 is capable of not only performing the reagent dispensing operation but also performing the supernatant aspiration operation. Therefore, the specimen preparation device 100 can be effectively downsized as compared with the case where the specimen preparation device 100 includes a dedicated mechanism for removing supernatant in the reaction containers 300.

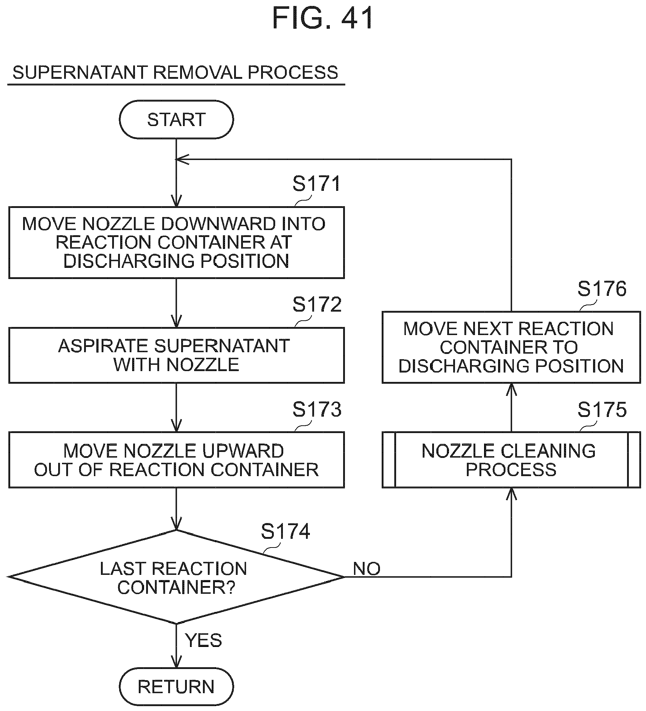

With reference to FIG. 41, a description is given of control in the process for removing supernatant in the reaction container 300 by the dispensing unit 120. In step S171, the control unit 200 moves the nozzle 121 positioned at the discharging position PN2 downward, and inserts the nozzle 121 into the reaction container 300 positioned directly below the discharging position PN2.

In step S172, the control unit 200 makes the nozzle 121 aspirate supernatant through its tip. The control unit 200 makes the nozzle 121 aspirate the supernatant by the negative pressure supplied from the negative pressure source 165b. The aspirated supernatant is sent to the waste liquid tank 160.

In step S173, the control unit 200 moves the nozzle 121 upward so that the nozzle 121 is positioned above the reaction container 300.

In step S174, the control unit 200 determines whether or not the reaction container 300 from which supernatant has been just removed is the last reaction container 300 from which supernatant was to be removed. If the reaction container is not the last reaction container 300, the processing proceeds to step S175. In step S175, the control unit 200 cleans the nozzle 121. In step S176, the control unit 200 rotates the holder 111 holding the reaction container 300 from which the supernatant is to be removed next, to immediately below the discharging position PN2, and returns the processing to step S171. By repeating steps S171 to S176, supernatant is removed from each of the reaction containers 300 from which the supernatant is to be removed.

When the control unit 200 determines in step S174 that the reaction container 300 from which the supernatant has been just removed is the last reaction container 300, the supernatant removal process ends.

### <Nozzle Cleaning Process>

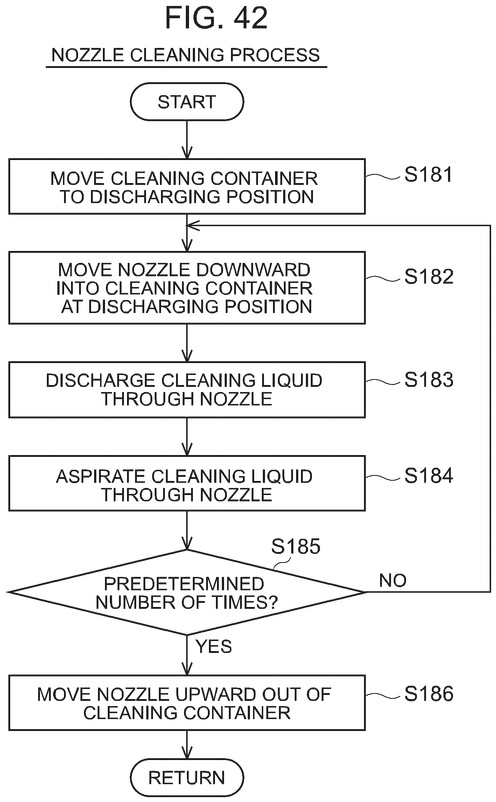

With reference to FIG. 42, a description is given of control in the cleaning process for the nozzle 121 by the dispensing unit 120.

In step S181, the control unit 200 rotates the rotor 112 such that a cleaning container 302a for the nozzle 121 is positioned directly below the discharging position PN2.

In step S182, the control unit 200 rotates the rotor 112 such that a cleaning container 302a for the nozzle 121 is positioned directly below the discharging position PN2. The control unit 200 moves downward the nozzle 121 positioned at the discharging position PN2 and inserts the nozzle 121 into the cleaning container 302a.

In step S183, the control unit 200 discharges the cleaning liquid from the tip of the nozzle 121. The control unit 200 discharges the cleaning liquid from the cleaning liquid tank 166 by the positive pressure supplied from the positive pressure source 165a.

In step S184, the control unit 200 makes the nozzle 121 aspirate the cleaning liquid from its tip. The control unit 200 makes the nozzle 121 aspirate the cleaning liquid by the negative pressure supplied from the negative pressure source 165b. The aspirated cleaning liquid is sent to the waste liquid tank 160.

In step S185, the control unit 200 determines whether or not the discharging and aspiration of the cleaning liquid have been performed a predetermined number of times. The predetermined number of times is one or more and can be set to any number. If the discharging and aspiration of the cleaning liquid have not been performed the predetermined number of times, the control unit 200 returns the processing to step S181. By repeating steps S181 to S185, one unit of cleaning operation for the nozzle 121 including discharging and aspiration of the cleaning liquid is repeated the predetermined number of times.

When the discharging and aspiration of the cleaning liquid have been performed the predetermined number of times, the control unit 200 moves the nozzle 121 upward to above the cleaning container 302a in step S186, and then the cleaning process is completed.

### (Example of Specimen Preparation Process)

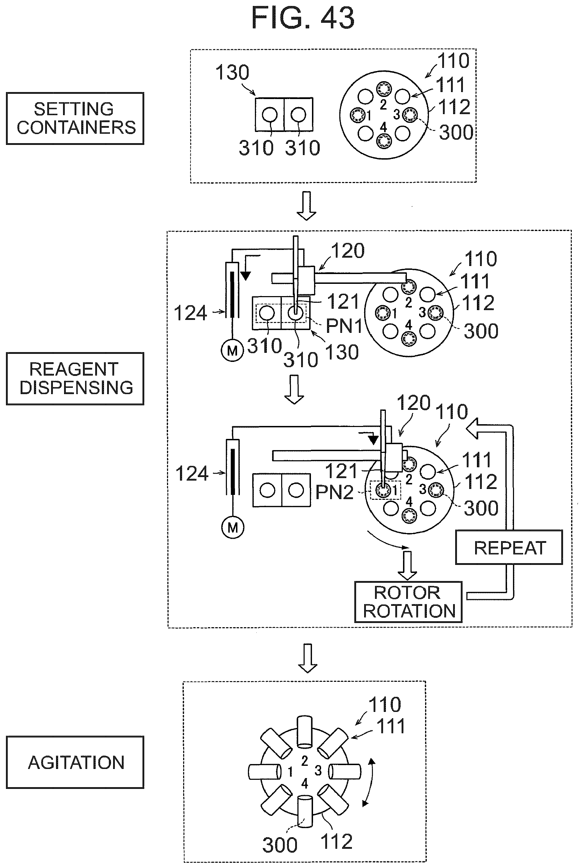

A description is given of an example of the specimen preparation process. First, a typical procedure is described with reference to FIGs. 43 to 45. For convenience, in the illustrated example, four samples are subjected to dispensing processes of the first and second reagents, an agitation process, a reaction process, a temperature control process, centrifugation, and a supernatant removal process. Although the nozzle cleaning process is performed immediately before or immediately after aspiration or discharging with the nozzle 121, description thereof is omitted here.

As illustrated in FIG. 43, first, containers to be used for the specimen preparation are set. First reagent containers 310 are set to the first reagent setting part 130. Reaction containers 300 containing the samples are set to the holders 111 of the centrifugation unit 110. Then, a dispensing process is performed. The dispensing unit 120 aspirates the first reagent. Discharging of the first reagent to a reaction container 300 by the dispensing unit 120 and movement of the reaction containers 300 by the rotation of the rotor 112 are repeated, and thereby the first reagent is sequentially dispensed into the four reaction containers 300. After the first reagent is dispensed, an agitation process is performed by the centrifugation unit 110. The samples and the first reagent are mixed by the agitation.

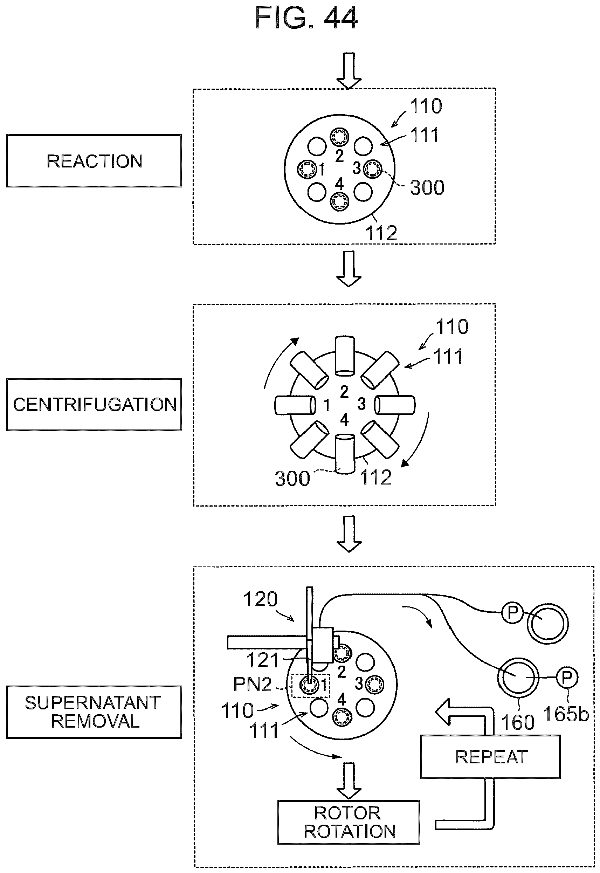

As illustrated in FIG. 44, after the agitation, a reaction process and a temperature control process are performed in the centrifugation unit 110. The temperature adjustment unit 117 is controlled such that a predetermined temperature is kept for a predetermined time. After the reaction, the centrifugation unit 110 performs centrifugation. The centrifugation makes the solid components precipitated in the reaction container 300 and separated from the liquid components. After the centrifugation, the supernatant is removed. By repeating aspiration of the supernatant from a reaction container 300 by the dispensing unit 120 and movement of the reaction containers 300 by the rotation of the rotor 112, the supernatant is removed sequentially from the four reaction containers 300.

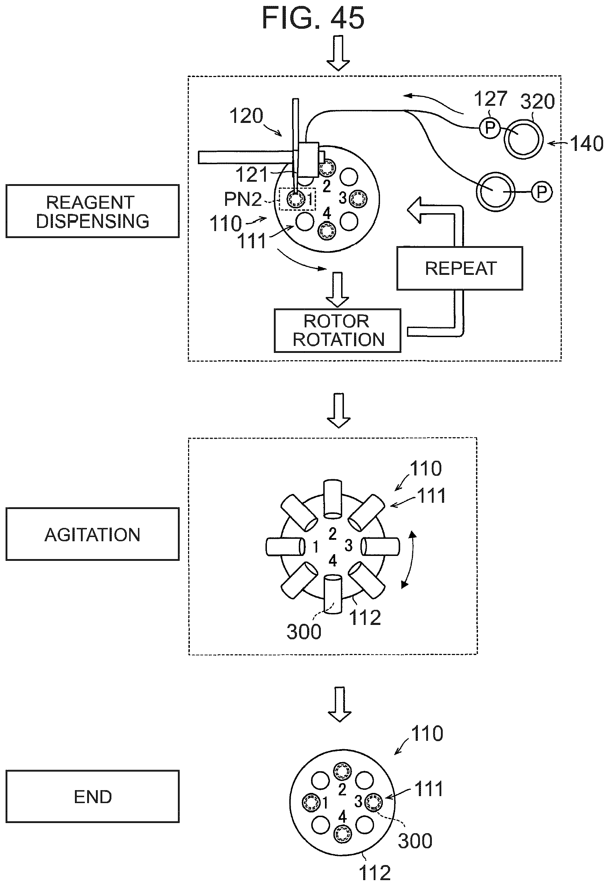

As illustrated in FIG. 45, after the removal of the supernatant, a dispensing process is performed. By repeatedly sending of the second reagent from the second reagent container 320 to the dispensing unit 120 and discharging of the second reagent into a reaction container 300, and movement of the reaction containers 300 by rotating the rotor 112, the second reagent is dispensed sequentially into the four reaction containers 300. After dispensing of the second reagent, the centrifugation unit 110 performs an agitation process. The contents of the reaction containers 300 and the second reagent are mixed by the agitation. When the agitation is completed, the specimen preparation ends.

As described above, the specimen preparation processing is performed by the combination of the operation items described above (the dispensing process, agitation process, reaction process, supernatant removal process, nozzle cleaning process, and temperature control process). Such a combination is determined according to the specimen preparation assay.

A description is given of an example of more specific specimen preparation process. In one example, the specimen preparation device 100 prepares specimens for analysis of T cells involved in an immune response. The specimen preparation device 100 uses whole blood as a sample, and performs processes for detecting regulatory T cells (Treg cells) and effector T cells (Teff cells) among the T cells in the blood, distinguishing between the Treg cells and the Teff cells. The Treg cells and Teff cells are test substances.

The specimen preparation device 100 performs processes of staining the Treg cells and the Teff cells with different labeling substances. As an example, the Treg cells are stained with an antibody reagent specific to the surface antigen CD4, surface antigen CD25, and forkheadbox P3 transcription factor (Foxp3). Expression of CD25 and Foxp3 is characteristic of Treg cells. The Teff cells are stained with an antibody reagent specific to the surface antigen CD4 and the surface antigen CD62L. Expression of CD4 and CD62L is characteristic of Treg cells.

First reagent are antibody reagents for staining these T cells. In one example, two reagent containers are set in the first reagent setting part 130. One is a first reagent container 310 containing a cocktail reagent containing a CD25 labeled antibody, a CD4 labeled antibody, and a CD62L labeled antibody, and the other is a first reagent container 310 containing a reagent containing a Foxp3 labeled antibody.

The label measurement is performed optically with a flow cytometer. The labeling substances contained in the labeled antibodies are fluorescent substances. The CD25 labeled antibody, the CD4 labeled antibody, the CD62 labeled antibody, and the Foxp3 labeled antibody have different fluorescent colors and are distinguishable from each other.

The second reagents are various reagents used for staining processes. The second reagents include a hemolytic agent that elutes red blood cells, an immobilizing agent that fixes cells, a permeating agent that allows reagents to permeate cell membranes, a diluent, a buffer solution, and a cleaning solution for samples. Second reagent containers 320 for storing the respective second reagents described above are set in the second reagent setting part 140.

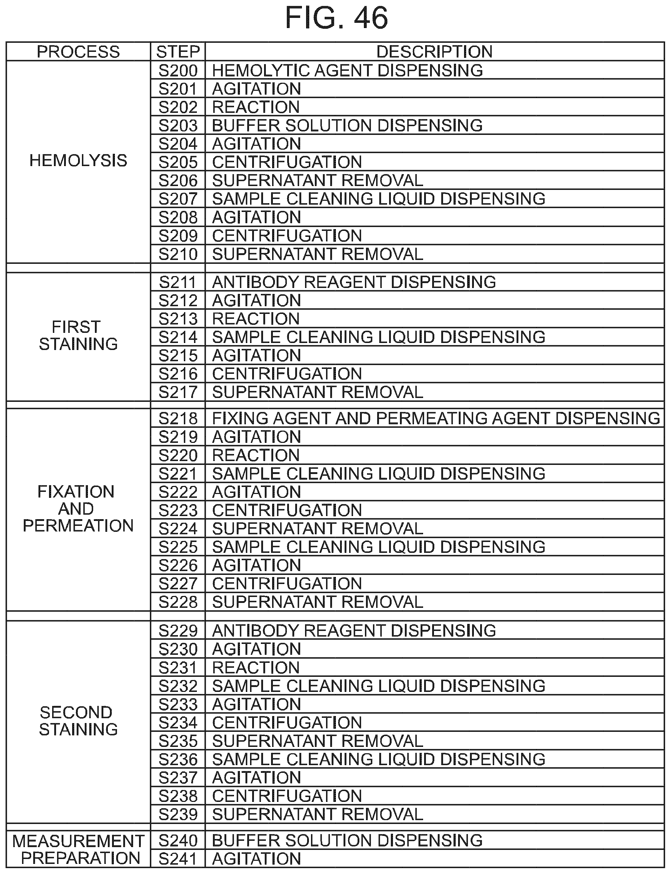

As illustrated in FIG. 46, the specimen preparation process is roughly classified into a hemolysis process, a first staining process for surface antigens CD25, CD4, and CD62, a cell fixation and permeation process, and a second staining process for Foxp3, which are executed in this order. As a final process, there is a preparatory process for preparing measurement specimens. Since these operations are classified into one of the operation items. Since the operation details are as described above, only the outline is described.

### <Hemolysis Process>

In step S200, the hemolytic agent in a second reagent container 320 is dispensed into each reaction container 300.

In step S201, agitation is performed.

In step S202, reaction is carried out at a predetermined temperature for a predetermined time. The predetermined time is, for example, 10 minutes, and the reaction temperature is about 4 °C.

In step S203, the buffer solution in a second reagent container 320 is dispensed into each reaction container 300. The buffer solution stops the progress of the hemolytic reaction.

In step S204, agitation is performed.

In step S205, centrifugation is performed.

In step S206, the supernatant is removed from each reaction container 300.

In step S207, the cleaning liquid for pre-fixation samples in a second reagent container 320 is dispensed.

In step S208, agitation is performed.

In step S209, centrifugation is performed.

In step S210, the supernatant is removed from each reaction container 300. Thus, the red blood cells in the samples are removed from the reaction containers 300.

### <First Staining Process>

In step S211, the cocktail reagent containing the CD25 labeled antibody, the CD4 labeled antibody, and the CD62 labeled antibody is dispensed each reaction container 300 from a first reagent container 310.

In step S212, agitation is performed.

In step S213, reaction is carried out at a predetermined temperature for a predetermined time. The predetermined time is, for example, 30 minutes, and the reaction temperature is about 4 °C.

In step S214, the cleaning liquid for pre-fixation samples in a second reagent container 320 is dispensed.

In step S215, agitation is performed.

In step S216, centrifugation is performed.

In step S217, the supernatant is removed from each reaction container 300. Thus, the surface antigens CD25, CD4, and CD62 are stained with the corresponding labeling substances.

### <Cell Fixation and Permeation Process>

In step S218, the an immobilizing agent and the permeating agent in second reagent containers 320 are dispensed into each reaction container 300.

In step S219, agitation is performed.

In step S220, reaction is carried out at a predetermined temperature for a predetermined time. The predetermined time is, for example, 30 minutes, and the reaction temperature is about 4 °C.

In step S221, the cleaning liquid for post-fixation samples in a second reagent container 320 is dispensed.

In step S222, agitation is performed.

In step S223, centrifugation is performed.

In step S224, the supernatant is removed from each reaction container 300.

In steps S225 to S228, dispensing of the cleaning liquid, agitation, centrifugation, and removal of the supernatant are performed. That is, the sample cleaning process is repeated. The sample cleaning process may be performed once (only S221 to S224 are performed), twice (S221 to S228 are performed) or three times or more. Thus, the fixation process and the permeation process are performed on the cells in the reaction containers 300.

### <Second Staining Process>

In step S229, the reagent containing the Foxp3 labeled antibody is dispensed into each reaction container 300 from a first reagent container 310.

In step S230, agitation is performed.

In step S231, reaction is carried out at a predetermined temperature for a predetermined time. The predetermined time is, for example, 30 minutes, and the reaction temperature is about 4 °C.

In step S232, the cleaning solution for post-fixation samples in a second reagent container 320 is dispensed.

In step S233, agitation is performed.

In step S234, centrifugation is performed.

In step S235, the supernatant is removed from each reaction container 300.

In steps S236 to S239, the sample cleaning process is repeated, including dispensing of the cleaning liquid, agitation, centrifugation, and removal of the supernatant. The sample cleaning process may be performed once (only S232 to S235 are performed), twice (S232 to S239 are performed), or three times or more. Thus, Foxp3 in the reaction containers 300 are stained with the corresponding labeling substance.

### <Preparation Process>

In step S240, the buffer solution in a second reagent container 320 is dispensed. By the dispensing, the samples in the reaction containers 300 are adjusted so as to have a predetermined liquid amount and a predetermined pH suitable for being supplied to the measuring device.

In step S241, agitation is performed.

Thus, the specimen preparation by the specimen preparation device 100 is completed.

### (Analysis Example)

The prepared samples are subjected to optical measurement using a measuring device equipped with a flow cytometer. The measuring device distinguishes and counts Treg cells and Teff cells in the samples by detecting signals corresponding to the labeling substances. That is, the cells that generate fluorescence of the CD4 labeled antibody, fluorescence of the CD25 labeled antibody, and fluorescence of the Foxp3 labeled antibody are detected as Treg cells. The cells that generate fluorescence of the CD4 labeled antibody and fluorescence of the CD62L labeled antibody are detected as Teff cells.

The measurement results obtained from the measuring device are used, for example, in the analysis of predicting the effects of an immune checkpoint inhibitor, which is a cancer therapeutic agent. In the analysis, the effects of the immune checkpoint inhibitor are predicted from the abundance ratio of the Teff cells and the Treg cells in a sample. As an analysis example, for example, if the value of effect index = (the number of Teff cells)²/(the number of Treg cells) is a predetermined threshold or more, it is determined that the immune checkpoint inhibitor is likely to be effective. Immune checkpoint inhibitors are considered to inhibit the binding of immune checkpoint molecules expressed on activated T cells to their ligands expressed on cancer cells (or antigen-presenting cells), thereby releasing the suppression of activation of T cells by the immune checkpoint molecules and maintaining the antitumor effects. This is based on the knowledge that in the case where the abundance ratio of the Teff cells, which is a prerequisite for the activated T cell function, is sufficiently high and the immune state is not suppressed by the Treg cells (in the case where the effect index is equal to or higher than the threshold), the immune checkpoint inhibitors are likely to be effective and that in the case where the abundance ratio of the Teff cells is lower than that of the Treg cells (when the effect index is below the threshold), the immune checkpoint inhibitors may be less effective.

The Treg cells expressing CD4, CD25, and Foxp3 and the Teff cells expressing CD4 and CD62L can function as effect prediction markers for the case where the immune checkpoint molecule is PD-1 (PD-L1). For preparation of specimens used to predict the effects of an immune checkpoint inhibitor using other immune checkpoint molecules such as CTLA-4, labeled antibodies for detecting effect prediction markers corresponding to the immune checkpoint molecule are used.

### (Modified Example)

It should be noted that the embodiments disclosed herein are exemplary in all respects and are not considered to be restrictive. The scope of the present invention is illustrated by the scope of the claims rather than the description of the embodiments described above, and also includes all modifications within the meaning and scope equivalent to the scope of the claims.

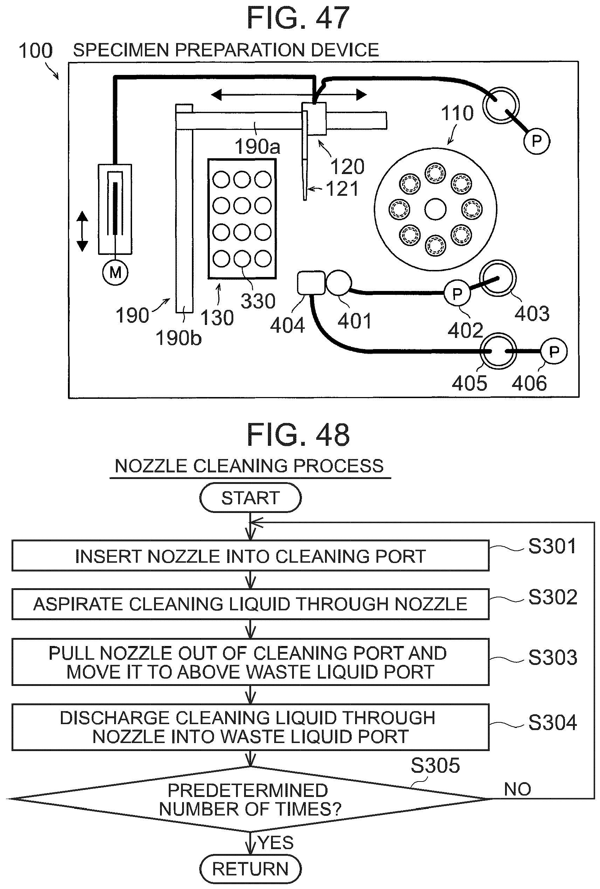

For example, although the above embodiment is based on an example in which the dispensing unit 120 is configured to perform the first dispensing operation of aspirating a specified amount of a first reagent from the first reagent container 310 through the nozzle 121 and discharging it into the reaction container 300 and the second dispensing operation of sending a second reagent of a specified amount larger than the first reagent dispensing amount from the second reagent container320 through the flow path 123 to the nozzle 121 and discharging it into the reaction container 300, the present invention is not limited to this example. In the present invention, as illustrated in FIG. 47, all reagent dispensing operations may be performed as dispensing operations of the dispensing unit 120 aspirating reagents from reagent containers 330 through the nozzle 121 and discharging them into the reaction containers 300. Alternatively, all reagent dispensing operations may be performed as dispensing operations of the dispensing unit 120 sending reagents from reagent containers through flow paths to the nozzle 121 and discharging them into the reaction containers 300.

Although the above embodiments are based on an example in which the nozzle 121 of the dispensing unit 120 is provided on the movement mechanism 128 having the movement axis 128a located and fixed at a specified position such that the movement axis 128a spans the centrifugation unit 110 and the reagent setting part in the horizontal plane, the present invention is not limited to this example. In the present invention, the nozzle 121 may be provided on a movement mechanism 190, as illustrated in FIG. 47, having two movement axes, a first axis 190a and a second axis 190b that is orthogonal to the first axis 190a and moves the first axis 190a.

Although the above embodiments are based on an example in which cleaning sections (cleaning containers 302a) are provided on the rotor 112, the present invention is not limited to this example. In the present invention, providing cleaning sections (cleaning containers 302a) on the rotor 112 is not essential. in FIG. 47, the specimen preparation device 100 has a cleaning port 401 provided separately from the centrifugation unit 110. The cleaning port 401 has a cleaning tank capable of storing cleaning liquid. The cleaning tank is supplied with cleaning liquid from a cleaning liquid container 402 by a pump 403. In FIG. 47, the specimen preparation device 100 includes a waste liquid port 404, a waste liquid tank 405, and a pump 406.

A nozzle cleaning process according to the modification is described below. In step S301 of FIG. 48, the control unit 200 moves the nozzle 121 downward into the cleaning port 401 from a position above the cleaning port 401. In step S302, the control unit 200 makes the nozzle 121 aspirate cleaning liquid stored in the cleaning port 401. The control unit 200 makes the pump 403 add cleaning liquid to the cleaning port 401. In step S303, the control unit 200 moves the nozzle 121 upward out of the cleaning port 401 then moves the nozzle 121 horizontally to a position above the waste liquid port 404. In step S304, the control unit 200 discharges the cleaning liquid aspirated through the nozzle 121, into the waste liquid port 404 through the nozzle 121. The control unit 200 makes the pump 406 send the discharged liquid to the waste liquid tank 405. With this operation, one cycle of a cleaning operation for the nozzle 121 is completed. In step S305, the control unit 200 determines whether or not cleaning operations for the nozzle 121 have been performed a specified number of times. The control unit 200 repeats the steps from S301 to S305 until the number of cleaning operations performed for the nozzle 121 reaches a specified number. When the number of cleaning operations performed for the nozzle 121 reaches the specified number in step S305, the cleaning process for the nozzle 121 ends.

Although the above embodiments are based on an example in which the display 204 is controlled to display the holders 111 to hold containers such that those holders 111 are identifiable among the plurality of holders 111, the present invention is not limited to this example. In the present invention, displaying the holder 111 to hold containers on the display 204 is not essential.

Although the above embodiments are based on an example in which the centrifugation unit 110 has the temperature adjustment unit 117 including a heat transfer surface 117a adapted to be adjacent to and face the surface 111b of the holder 111 on the rotating shaft 113 side, the present invention is not limited to this example. In the present invention, the temperature adjustment unit 117 may be configured, for example, such that the temperature adjustment unit 117 adjusts the temperature of the air inside the centrifugation unit 110, and that the temperature of the contents of the reaction container 300 is adjusted by convective heat transfer of the internal air. Alternatively, the temperature adjustment unit 117 may be configured, for example, such that the temperature adjustment unit 117 located outside the centrifugation unit 110 and connected to the centrifugation unit 110 circulates temperature-adjusted air between the centrifugation unit 110 and the temperature adjustment unit 117. Alternatively, the holder 111 may have a temperature adjustment unit 117 such as a Peltier element. The centrifugation unit 110 does not have to have a temperature adjustment unit 117 other than this unit.

Although the above embodiments are based on an example in which the first reagent setting part 130 has the shutter member 134 and the shutter drive unit 135 so that the insertion openings 132 of the first reagent setting part 130 can be opened or closed, the present invention is not limited to this example. In the present invention, the shutter member 134 and the shutter the driving unit 135 are not indispensable. In other words, the insertion openings 132 of the first reagent setting part 130 may be always open.

Preferred embodiments of the invention may be specified as follows.

A specimen preparation method that prepares a specimen by reacting a reagent with a sample, comprising: reacting the reagent with the sample by dispensing the reagent into a reaction container held by a holder of a centrifuge, the holder being swingably supported by the centrifuge; and rotating the holder of the centrifuge for a centrifugal separation of a mixture of the sample and the reagent in the reaction container while restricting a tilt angle of the reaction container by a restriction member arranged to contact with the reaction container tilted by a centrifugal force.

The method according to the method above, wherein changing the angular acceleration of the rotation includes repeatedly changing the angular acceleration of the rotation of the reaction container during the agitation, and controlling the position of the holder includes repeatedly occurring the contact state and the non-contact state during the agitation.

The method according to the method above, wherein changing the angular acceleration of the rotation includes changing the angular acceleration by performing intermittent rotation or reverse rotation.

The method according to the method above, wherein restricting a tilt angle includes restricting the tilt angle such that an angle between a longitudinal direction of the reaction container and a direction of a centrifugal force acting on a content included in the reaction container during rotation of the reaction container is within a range of 20 degrees to 70 degrees.

The method according to the method above, wherein the restriction member comes into contact with the holder and comprises an inclined surface corresponding to the tilt angle of the reaction container.

The method according to the method above, wherein the restriction member is detachably provided.

### EXPLANATION OF REFERENCE NUMERALS

10:centrifugation unit, 11:rotor, 12:holder, 13:swing shaft, 14:reaction container, 15:restriction member, 20:dispensing unit, 21:nozzle, 100:specimen preparation device, 110:centrifugation unit, 111:holder, 111a:outer peripheral surface, 112:rotor, 112d:swing shaft, 116:restriction member, 116a:inclined surface, 120:dispensing unit, 121:nozzle, 200:control unit, 300:reaction container, DR1:longitudinal direction, DR2:direction of centrifugal force, PP:precipitate, θ:tilt angle

## Claims

1. A centrifuge comprising:
a rotor comprising a holder for holding a reaction container and swingably supporting the holder;
a rotating shaft connected to the rotor;
a rotor drive unit for rotating the rotating shaft; and
a restriction member arranged to come into contact with the holder to restrict a tilt angle of the reaction container when the rotor drive unit is rotating the rotating shaft.

2. The centrifuge according to claim 1, wherein
the restriction member is positioned to come into contact with a side surface of the holder when the rotor drive unit rotates the rotating shaft.

3. The centrifuge according to claim 1 or 2, further comprising
a control unit for controlling the rotor drive unit such that an angular acceleration of the rotor is changed to agitate a content included in the reaction container, wherein
the control unit controls the rotor drive unit such that a contact state in which the holder is in contact with the restriction member and a non-contact state in which the holder is away from the restriction member occur during the agitation.

4. The centrifuge according to claim 3, wherein
the control unit controls the rotor drive unit such that the angular acceleration of the rotor is repeatedly changed during the agitation, and
the control unit controls the rotor drive unit such that the contact state and the non-contact state repeatedly occur during the agitation.

5. The centrifuge according to claim 3 or 4, wherein
the control unit controls the rotor drive unit such that the angular acceleration of the rotor is changed and the rotor performs intermittent rotation or reciprocating rotation.

6. The centrifuge according to any one of claims 1 to 5, wherein
the restriction member restricts the tilt angle of the reaction container such that the angle between a longitudinal direction of the reaction container and the direction of a centrifugal force acting on the contents of the reaction container during rotation of the rotor is within a range of 20 degrees to 70 degrees.

7. The centrifuge according to any one of claims 1 to 6, wherein
the restriction member comes into contact with the holder and comprises an inclined surface adapted to the tilt angle of the reaction container.

8. The centrifuge according to any one of claims 1 to 7, wherein
the restriction member is detachably provided to the rotor.

9. The centrifuge according to any one of claims 1 to 8, wherein
at least a portion of the restriction member, the portion coming into contact with the holder, is formed of an impact-resistant material.

10. The centrifuge according to any one of claims 1 to 9, wherein
at least a portion of the restriction member, the portion coming into contact with the holder, is formed of an elastic material.

11. A specimen preparation device that prepares a specimen by reacting a reagent with a sample, comprising:
the centrifuge according to any one of claims 1 to 10; and
a dispensing unit that dispenses the reagent into the reaction container.

12. The specimen preparation device according to claim 11, wherein
the sample is blood, and
the reagent is at least one selected from the group consisting of a hemolytic agent, an immobilizing agent, a permeating agent, an antibody reagent, and a cleaning liquid.

13. A specimen preparation method that prepares a specimen by reacting a reagent with a sample, comprising:
reacting the reagent with the sample by dispensing the reagent into a reaction container held by a holder of a centrifuge, the holder being swingably supported by the centrifuge; and
rotating the holder of the centrifuge for a centrifugal separation of a mixture of the sample and the reagent in the reaction container while restricting a tilt angle of the reaction container by a restriction member arranged to contact with the reaction container tilted by a centrifugal force.

14. The method according to claim 13, wherein
the restriction member is provided to come into contact with a side surface of the holder when rotation of the reaction container is conducted.

15. The method according to claim 13, further comprising
changing an angular acceleration of the rotation of the reaction container to agitate a contents included in the reaction container, wherein
controlling the holder such that a contact state in which the holder is in contact with the restriction member and a non-contact state in which the holder is away from the restriction member occur during the agitation.
